# EUROPEAN PATENT SPECIFICATION

(11) **EP 3 901 021 B1**
(45) Date of publication and mention of the grant of the patent: **03.05.2023**
(21) Application number: 20752478.6
(22) Date of filing: 06.02.2020
(51) Int. Cl.: B62M 25/08, B62K 25/04, B62M 11/06, B62J 45/41, B62J 45/415, F16H 61/02, F16H 61/16, F16H 63/18, B60G 17/016, B60W 30/045, B60W 50/00, B62M 25/00, F16H 59/14, F16H 59/24, F16H 59/50, F16H 59/58, F16H 63/40, F16H 63/46, F16H 63/50

(54) **LEANING VEHICLE**
NEIGEFAHRZEUG
VÉHICULE À INCLINAISON

(30) Priority: 06.02.2019 JP 2019019428
(43) Date of publication of application: 27.10.2021
(73) Proprietor: Yamaha Hatsudoki Kabushiki Kaisha, Iwata-shi, Shizuoka 438-8501 (JP)
(72) Inventor: OHATA, Shinobu, Iwata-shi, Shizuoka 438-8501 (JP)
(74) Representative: Stöckeler, Ferdinand
(86) International application number: PCT/JP2020/004674
(87) International publication number: WO 2020/162570

(56) References cited:
- WO-A1-2012/067234
- JP-A- 2008 075 761
- JP-A- 2010 084 861
- JP-A- 2012 197 809
- US-A1- 2012 239 264

## Description

### TECHNICAL FIELD

The present teaching relates to a leaning vehicle that leans leftward when turning to the left and leans rightward when turning to the right.

### BACKGROUND ART

A known gear-shift controller of a motorcycle controls a gear-shift of the gear-shift controller. As such a gear-shift controller, Patent Document 1 and US 2012/239264 A1, which is a family member of Patent Document 1, for example, disclose a gear-shift controller of a motorcycle capable of performing gear-shift control in different modes in transferring a driving force depending on a roll angle of a vehicle body. Patent Document 1 (JP 2012-197809 A) and US 2012/239264 A1 disclose a leaning vehicle according to the preamble of claim 1.

Specifically, the gear-shift controller disclosed in Patent Document 1 includes a roll angle detector that detects a roll angle of the motorcycle, and a controller configured not to perform normal gear-shift control if the roll angle exceeds a first roll angle. The controller performs a gear-shift by soft gear-shift control in which a change of a driving force with time is smaller than that in the normal gear-shift control in a range where the roll angle is from the first roll angle to a second roll angle larger than the first roll angle.

Patent Document 1 also discloses that the controller performs gear-shift control in accordance with a pitch angle of the vehicle body. That is, Patent Document 1 discloses that in a case where a front wheel is separated from a road surface by a driving force of a rear wheel, a sensor detects a tilt angle of a body center line in the front-rear direction of the vehicle body with respect to the horizontal road surface, that is, a pitch angle, and in a range where the pitch angle exceeds a second pitch angle, the controller inhibits a gear-shift even when the gear-shift is requested. Patent Document 1 also discloses that when a gear-shift is requested in a range from a first pitch angle smaller than the second pitch angle to the second pitch angle, the controller performs a gear-shift by the soft gear-shift control.

### CITATION LIST

### PATENT DOCUMENT

Japanese Patent Application Publication No. 2012-197809

### SUMMARY OF INVENTION

### TECHNICAL PROBLEM

As disclosed in FIG. 12 of Patent Document 1, in the gear-shift controller disclosed in Patent Document 1, it is assumed that in the case of performing a gear-shift based on the pitch angle as described above, the front wheel of the motorcycle is separated from the road surface. That is, in the gear-shift controller disclosed in Patent Document 1, in the state where the front wheel of the motorcycle is separated from the road surface, a gear-shift is inhibited or soft gear-shift control is performed based on the pitch angle.

On the other hand, while the leaning vehicle is turning, the center of a steering shaft of the front wheel is displaced from the center of the ground area of the front wheel. Thus, when a load of the front wheel changes by pitching caused by, for example, a gear-shift, the steering angle (rolling direction) of the front wheel changes. The posture of the leaning vehicle in the left-right direction changes in accordance with a change in the steering angle of the front wheel. Accordingly, a travel line of the leaning vehicle changes. Thus, while the leaning vehicle turns in a lean state, it is desirable to reduce a posture change of the leaning vehicle in the left direction or in the right direction caused by a gear-shift. That is, while the leaning vehicle turns in the lean state, it is desirable to perform a gear-shift so as not to cause a posture change of the vehicle in the left direction or in the right direction.

It is therefore an object of the present teaching to provide a leaning vehicle capable of reducing a posture change in the left direction or in the right direction due to a change of a travel line of the leaning vehicle caused by a gear-shift while the leaning vehicle turns in a lean state.

### SOLUTION TO PROBLEM

An inventor of the present teaching studied a leaning vehicle capable of reducing a posture change in the left direction or in the right direction due to a change of a travel line of the leaning vehicle caused by a gear-shift while the leaning vehicle turns in a lean state.

Through an intensive study, the inventor of the present teaching has reached the following configuration.

According to claim 1, a leaning vehicle according to the invention of the present teaching is a leaning vehicle that leans leftward when turning to the left and leans rightward when turning to the right. The leaning vehicle includes: a vehicle body; a plurality of wheels including a front wheel and a rear wheel; a front suspension configured to support the front wheel to the vehicle body such that the front wheel is allowed to be displaced, the front suspension being extendable and contractable; a rear suspension configured to support the rear wheel to the vehicle body such that the rear wheel is allowed to be displaced, the rear suspension being extendable and contractable; a driving source configured to supply a driving force to at least one of the front wheel or the rear wheel; a gear-type multi-stage automatic transmission including a plurality of gear stages and a clutch, and configured to change the driving force to be transferred from the driving source to the at least one of the front wheel or the rear wheel by automatically changing the gear stages stepwise; and a gear-shift controller configured to control changing of the gear stages in the multi-stage automatic transmission. Based on a vehicle state in which while the leaning vehicle that rotates about a rotation axis extending in a left-right direction by changing the gear stages in the multi-stage automatic transmission turns in a lean state, a change of a travel line of the leaning vehicle is predicted, the gear-shift controller performs at least one of suppression of a change of the driving force by changing the gear stages, or suppression of extension and contraction of the front suspension and the rear suspension.

In the case of changing the gear stages of the multi-stage automatic transmission while the leaning vehicle turns in the lean state, the leaning vehicle might rotate about the rotation axis extending in the left-right direction. With a change of a rotation angle (pitch angle) about the rotation axis extending in the left-right direction in the leaning vehicle, a wheel load exerted on the wheels of the leaning vehicle changes. With the change of the wheel load, friction at a ground point between a wheel shifted from a steering axis and the ground surface increases. When the friction at the ground point shifted from the steering axis increases, a rotation moment is generated on the steering shaft. The rotation moment generated on the steering shaft causes the steering angle to change toward a turning center. With the change of the steering angle, the travel line of the leaning vehicle changes. As described above, while the leaning vehicle turns in the lean state, there are possibilities of a change of the travel line due to a gear-shift of the multi-stage automatic transmission and a change of the posture of the leaning vehicle in the left direction or in the right direction.

Therefore, in the configuration described above, in a case where the posture change of the leaning vehicle as described above is predicted, the gear-shift controller performs at least one of inhibition of changing of the gear stages in the multi-stage automatic transmission, suppression of change of the driving force by changing the gear stages, or suppression of extension and contraction of the front suspension and the rear suspension. Accordingly, while the leaning vehicle turns in the lean state, the posture change occurring in the leaning vehicle as described above can be reduced. The suppression of change of the driving force by changing the gear stages includes inhibition of changing of the gear stages in the multi-stage automatic transmission. The gear-shift controller may perform control such that inhibition of changing of the gear stages and suppression of change of the driving force by changing the gear stages are both achieved. For example, the gear-shift controller performs control such that a gear-shift is inhibited in a predetermined gear stage and a gear-shift is permitted and a change of the driving force is suppressed in gear stages except for the predetermined gear stage.

In another aspect, the leaning vehicle according to the present teaching preferably includes the following configuration. The gear-shift controller predicts a change of the travel line of the leaning vehicle while the leaning vehicle that rotates about the rotation axis by changing the gear stages in the multi-stage automatic transmission turns in the lean state, based on at least one of an extension/contraction amount of at least one of the front suspension or the rear suspension, a rotation angle in a forward direction or in a rearward direction about the rotation axis of the leaning vehicle, or the driving force.

With this configuration, a change of the travel line of the leaning vehicle due to changing of the gear stages in the multi-stage automatic transmission while the leaning vehicle turns in the lean state can be predicted by using at least one of the extension/contraction amount of at least one of the front suspension or the rear suspension, a rotation angle of the leaning vehicle about the rotation axis in the forward direction or the rearward direction, or the driving force. Thus, a change of the travel line of the leaning vehicle by changing the gear stages in the multi-stage automatic transmission can be accurately predicted.

In another aspect, the leaning vehicle according to the present teaching preferably includes the following configuration. The gear-shift controller predicts that the leaning vehicle rotates about the rotation axis by changing the gear stages in the multi-stage automatic transmission and the travel line of the leaning vehicle changes if at least one of a condition that the extension/contraction amount of the front suspension is greater than or equal to a front extension/contraction amount threshold, a condition that the extension/contraction amount of the rear suspension is greater than or equal to a rear extension/contraction amount threshold, a condition that the rotation angle is greater than or equal to a rotation angle threshold, or a condition that the driving force is greater than or equal to a driving force threshold, is satisfied.

With this configuration, while the leaning vehicle turns in the lean state, a change of the travel line of the leaning vehicle by changing the gear stage in the multi-stage automatic transmission can be easily predicted.

In another aspect, the leaning vehicle according to the present teaching preferably includes the following configuration. The driving source supplies the driving force to the rear wheel. Based on at least one of an extension amount of the front suspension or a contraction amount of the rear suspension, the gear-shift controller predicts a change of the travel line of the leaning vehicle that rotates about the rotation axis by changing the gear stages in the multi-stage automatic transmission while the leaning vehicle turns in the lean state.

With this configuration, in a case where a driving force supplied to the rear wheel of the leaning vehicle decreases by changing the gear stages in the multi-stage automatic transmission while the leaning vehicle turns in the lean state, it is possible to predict that the leaning vehicle rotates forward about the rotation axis extending in the left-right direction.

In another aspect, the leaning vehicle according to the present teaching preferably includes the following configuration. If a change of the travel line of the leaning vehicle that rotates about the rotation axis by changing the gear stages in the multi-stage automatic transmission is predicted while the leaning vehicle turns in the lean state, the gear-shift controller reduces a disengaging speed of the clutch in changing the gear stages in the multi-stage automatic transmission as compared to a disengaging speed of the clutch in a case where a change of the travel line of the leaning vehicle is not predicted.

With this configuration, in a case where a change of the travel line of the leaning vehicle is predicted while the leaning vehicle turns in the lean state, the gear-shift controller can slowly perform a gear-shift of the multi-stage automatic transmission. Thus, a change of the travel line generated in the leaning vehicle by the gear-shift of the multi-stage automatic transmission can be reduced.

In another aspect, the leaning vehicle according to the present teaching preferably includes the following configuration. If a change of the travel line of the leaning vehicle that rotates about the rotation axis by changing the gear stages in the multi-stage automatic transmission is predicted while the leaning vehicle turns in the lean state, the gear-shift controller reduces the driving force and then disengages the clutch of the multi-stage automatic transmission in changing the gear stages in the multi-stage automatic transmission.

With this configuration, in a case where a change of the travel line of the leaning vehicle is predicted while the leaning vehicle turns in the lean state, the gear-shift controller can perform a gear-shift of the multi-stage automatic transmission after having reduced the driving force. Thus, a change of the travel line generated in the leaning vehicle by the gear-shift of the multi-stage automatic transmission can be reduced.

In another aspect, the leaning vehicle according to the present teaching preferably includes the following configuration. If a change of the travel line of the leaning vehicle that rotates about the rotation axis by changing the gear stages in the multi-stage automatic transmission is predicted while the leaning vehicle turns in the lean state, the gear-shift controller suppresses an extension/contraction amount of at least one of the front suspension or the rear suspension as compared to a case where a change of the travel line of the leaning vehicle is not predicted.

With this configuration, in the case where a change of the travel line of the leaning vehicle is predicted while the leaning vehicle turns in the lean state, even if a gear-shift of the multi-stage automatic transmission is performed, the extension/contraction amount of at least one of the front suspension or the rear suspension can be reduced. Accordingly, while the leaning vehicle turns in the lean state, a change of the travel line occurring in the leaning vehicle can be reduced.

In another aspect, the leaning vehicle according to the present teaching preferably includes the following configuration. While the leaning vehicle turns in the lean state, the gear-shift controller changes at least one of a range of a change of the travel line where changing of the gear stages is inhibited, a range of a change of the travel line where a change of the driving force by changing the gear stages is suppressed, or a range of a change of the travel line where extension and contraction of at least one of the front suspension or the rear suspension are suppressed, in accordance with a lean angle of the leaning vehicle.

While the leaning vehicle turns in the lean state, influence of changing of the gear stages in the multi-stage automatic transmission on a change of the travel line of the leaning vehicle varies in accordance with a lean angle of the leaning vehicle. As in the configuration described above, while the leaning vehicle turns in the lean state, a change of the travel line occurring in the leaning vehicle can be more reliably reduced by changing at least one of the range of change of the travel line where changing of the gear stages is inhibited, the range of change of the travel line where a change of the driving force is suppressed by changing the gear stages, or the range of a change of the travel line where extension and contraction of at least one of the front suspension or the rear suspension are suppressed, in accordance with the lean angle of the leaning vehicle.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has an individual benefit and each can also be used in conjunction with one or more, or in some cases all, of the other disclosed techniques within the scope of the appended claims.

Accordingly, for the sake of clarity, this description will refrain from repeating every possible combination of the individual steps in an unnecessary fashion. Nevertheless, the specification and claims should be read with the understanding that such combinations are included as long as the same are within the scope of the appended claims.

In this specification, embodiments of a leaning vehicle according to the present teaching will be described.

In the following description, for purposes of explanation, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right in the left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles as well as two-wheeled vehicles.

### [Lean Angle]

A lean angle herein is a lean angle to the left or right of the vehicle with respect to a vertical line.

### [Driving Source]

A driving source herein refers to a device that applies a driving force to wheels. The driving source includes, for example, a device capable of applying a rotation driving force, such as an engine, a motor, and a hybrid system combining an engine and a motor.

### [Automatic Transmission]

An automatic transmission herein refers to a device that performs a gear-shift based on a signal generated by a gear-shift controller. Thus, the automatic transmission performs a gear-shift without a gear-shift operation by a driver of the vehicle.

### [Vehicle State]

A vehicle state herein refers to a posture, a driving state, and other states of the leaning vehicle while the leaning vehicle turns in a lean state. Specifically, the vehicle state includes, for example, an operating state of suspensions displaceably supporting wheels to the vehicle body, and a driving force transferred from the driving source to at least one of the front wheel or the rear wheel through the multi-stage automatic transmission. The operating state of the suspensions includes, for example, a physical quantity and a state concerning operation of the suspensions, such as an extension/contraction amount of the suspensions, and an extension state or a contraction state of the suspensions.

### [Posture Change]

A posture change of the vehicle herein refers to a change of the posture of the vehicle caused by rotating of the vehicle about a rotation axis extending in the left-right direction. That is, the posture change of the vehicle refers to a change of the posture of the vehicle caused by, for example, a change of the extension/contraction amount of the suspensions of the vehicle or a change of the operating state (extension state or contraction state) of the suspensions.

### ADVANTAGEOUS EFFECTS OF INVENTION

One embodiment of the present teaching provides a leaning vehicle capable of reducing a posture change of the leaning vehicle due to a gear-shift while the leaning vehicle turns in a lean state.

### BRIEF DESCRIPTION OF DRAWINGS

[FIG. 1] FIG. 1 is a left side view of a vehicle according to a first embodiment.
[FIG. 2] FIG. 2 is a cross-sectional view illustrating a schematic configuration of a multi-stage automatic transmission.
[FIG. 3] FIG. 3 is a cross-sectional view illustrating a schematic configuration of a shift mechanism.
[FIG. 4] FIG. 4 is a view illustrating a vehicle that turns leftward when seen from the front.
[FIG. 5] FIG. 5 is a view illustrating an example of a case where a forward rotating force is exerted on the vehicle about a rotation axis.
[FIG. 6] FIG. 6 is a block diagram illustrating a schematic configuration of a gear-shift controller.
[FIG. 7] FIG. 7 is a graph illustrating an example of a relationship among an engine speed, a throttle opening degree, and an output torque of a crankshaft.
[FIG. 8] FIG. 8 is a graph showing an example of gear-shift control determination data.
[FIG. 9] FIG. 9 is a chart depicting an operation flow of gear-shift control by the gear-shift controller.
[FIG. 10] FIG. 10 is a graph showing a variation of the first embodiment and corresponding to FIG. 8.
[FIG. 11] FIG. 11 is a chart showing a variation of the first embodiment and corresponding to FIG. 9.
[FIG. 12] FIG. 12 is a diagram showing a gear-shift controller in a multi-stage automatic transmission of a vehicle according to a second embodiment, and corresponds to FIG. 6.
[FIG. 13] FIG. 13 is a view schematically illustrating configurations of a front suspension and a rear suspension.
[FIG. 14] FIG. 14 is a view schematically illustrating a configuration of a damper.
[FIG. 15] FIG. 15 is a graph showing an example of extension/contraction suppression determination data.
[FIG. 16] FIG. 16 is a chart depicting an operation flow of gear-shift control by the gear-shift controller, and corresponds to FIG. 9.
[FIG. 17] FIG. 17 is a diagram showing a gear-shift controller in a multi-stage automatic transmission of a vehicle according to a third embodiment, and corresponds to FIG. 6.
[FIG. 18] FIG. 18 is a chart depicting an operation flow of gear-shift control by the gear-shift controller, and corresponds to FIG. 9.
[FIG. 19] FIG. 19 is a diagram showing a multi-stage automatic transmission of a vehicle according to a fourth embodiment, and corresponds to FIG. 2.
[FIG. 20] FIG. 20 is a view schematically illustrating a configuration of the multi-stage automatic transmission.
[FIG. 21] FIG. 21 shows examples of a left side view of a vehicle, a cross-sectional view of a multi-stage automatic transmission, and a block diagram of a gear-shift controller.

### DESCRIPTION OF EMBODIMENT

Embodiments will be described hereinafter with reference to the drawings. The dimensions of components in the drawings do not strictly represent actual dimensions of the components and dimensional proportions of the components, for example.

In the following description, arrow F in the drawings represents a forward direction of a vehicle. Arrow RR in the drawings represents a rearward direction of the vehicle. Arrow U in the drawings represents an upward direction of the vehicle. Arrow R in the drawings represents a rightward direction of the vehicle. Arrow L in the drawings represents a leftward direction of the vehicle. The front, rear, left, and right directions respectively refer to the front, rear, left, and right directions when seen from a driver driving the vehicle.

### [First Embodiment]

### <Overall Configuration>

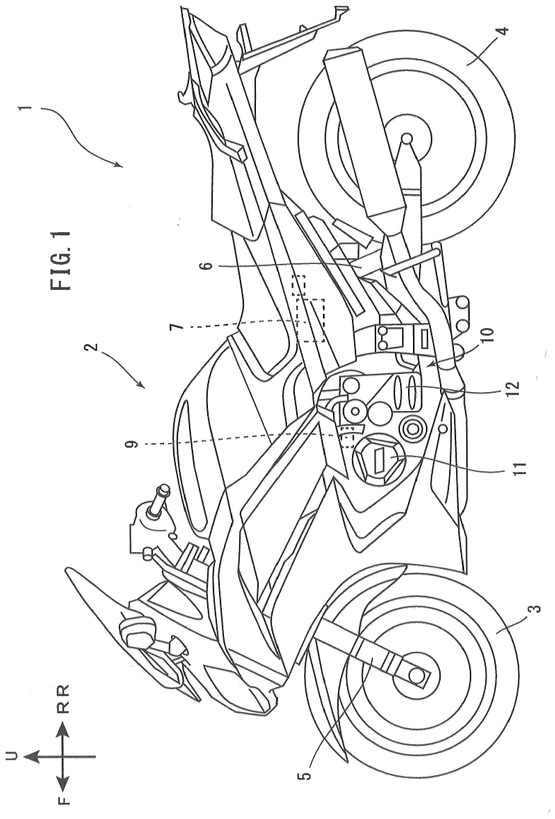

FIG. 1 illustrates a left side view of a vehicle 1 according to an embodiment of the present teaching. The vehicle 1 is, for example, a motorcycle. Specifically, the vehicle 1 is a leaning vehicle that leans leftward when turning to the left and leans rightward when turning to the right.

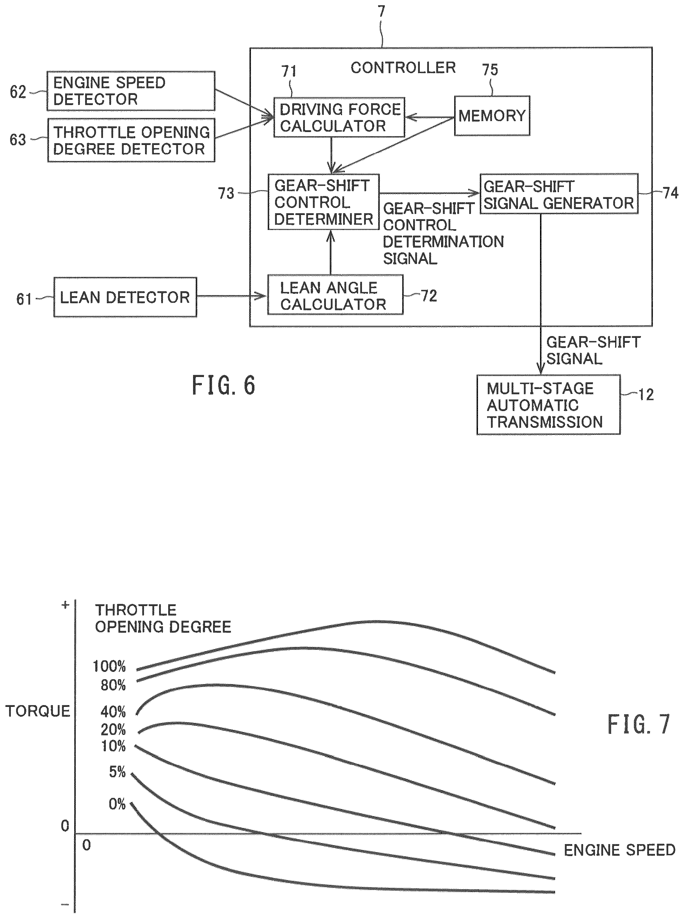

The vehicle 1 includes a vehicle body 2, a front wheel 3, a rear wheel 4, a front suspension 5, a rear suspension 6, a controller 7, a lean detector 61, an engine speed detector 62, a throttle opening degree detector 63, and an engine unit 10. The lean detector 61, the engine speed detector 62, and the throttle opening degree detector 63 are illustrated in FIG. 6.

The vehicle body 2 includes a frame, not shown. The frame of the vehicle body 2 is connected to the front suspension 5 supporting the vehicle body 2 to the front wheel 3, and to the rear suspension 6 supporting the vehicle body 2 to the rear wheel 4. The front suspension 5 elastically supports the vehicle body 2 to the front wheel 3 and generates a damping force. The rear suspension 6 elastically supports the vehicle body 2 to the rear wheel 4 and generates a damping force. Configurations of the front suspension 5 and the rear suspension 6 will be described later.

The engine unit 10 for supplying a rotation driving force to the rear wheel 4 is attached to the frame of the vehicle body 2. The engine unit 10 includes an engine 11 as a driving source, and a multi-stage automatic transmission 12 that shifts the speed of rotation output from the engine 11. The configuration of the engine unit 10 will be specifically described later.

The controller 7 for controlling driving of the engine unit 10 is disposed in the vehicle body 2. The controller 7 is a so-called electric control unit (ECU), and controls driving of other components in the vehicle 1 including the front suspension 5 and the rear suspension 6, as well as the engine unit 10.

The lean detector 61, the engine speed detector 62, and the throttle opening degree detector 63 are also disposed in the vehicle body 2. The lean detector 61 detects information on a leaning posture of the vehicle 1. In this embodiment, the lean detector 61 is, for example, an inertial measurement unit (IMU), and detects a lean angular velocity when the vehicle 1 leans leftward or rightward. The engine speed detector 62 detects a rotation speed of the engine 11. The throttle opening degree detector 63 detects an opening degree of a throttle valve, not shown. The lean detector 61 may detect at least one of an angular velocity (pitch angular velocity) when the vehicle 1 rotates forward or rearward about a rotation axis extending in the left-right direction of the vehicle 1 or an angular velocity (yaw angular velocity) when the vehicle 1 rotates about the vertical axis when seen from above.

### <Engine Unit>

Next, a configuration of the engine unit 10 will be described.

The engine unit 10 includes the engine 11 and the multi-stage automatic transmission 12. The engine 11 has a configuration similar to that of a typical engine. Thus, the engine 11 will not be described in detail.

The multi-stage automatic transmission 12 includes a plurality of gear stages and automatically changes the gear stages stepwise to thereby change a driving force to be transferred from the engine 11 to the rear wheel 4. Specifically, the multi-stage automatic transmission 12 includes a transmission mechanism 20, a clutch 40, and a shift mechanism 50.

The term of automatically changing the gear stages stepwise refers to changing to a next gear stage having a large gear-shift ratio or a next gear stage having a small gear-shift ratio without a gear-shift operation by a driver of the vehicle 1. At this time, an instruction signal instructing changing of the gear stages may be input, or may not be input, from the driver of the vehicle 1 to the multi-stage automatic transmission 12.

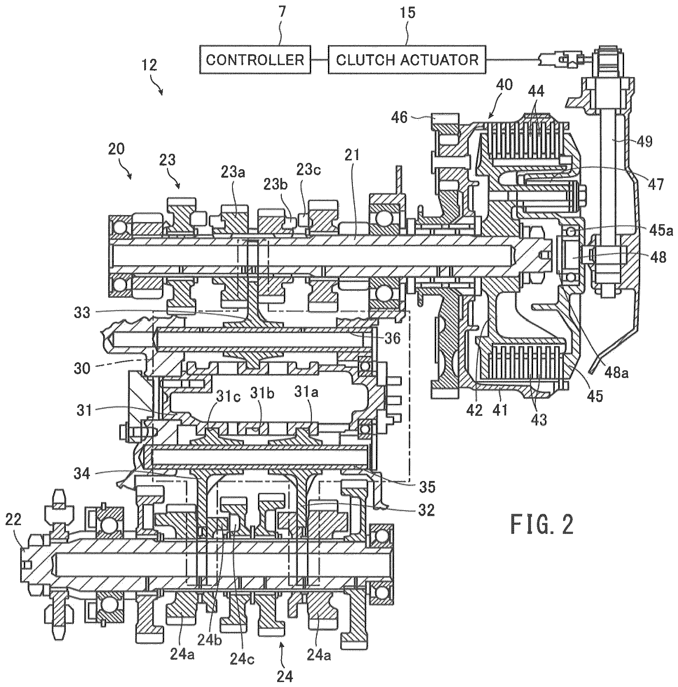

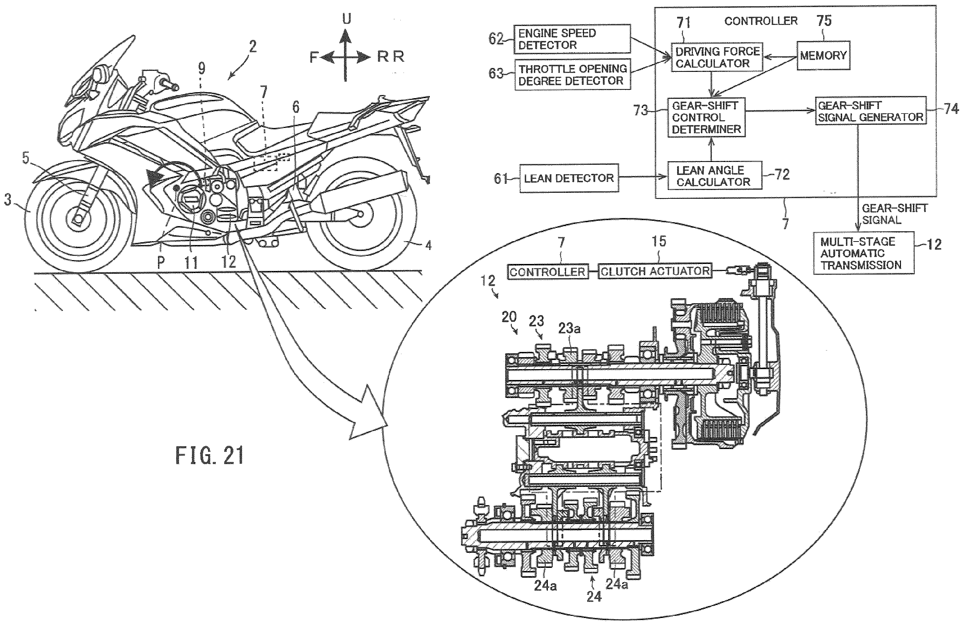

FIG. 2 illustrates schematic configurations of the transmission mechanism 20 and the clutch 40 of the multi-stage automatic transmission 12. FIG. 21 illustrates schematic configurations of the vehicle 1 and the multi-stage automatic transmission 12. FIG. 21 also illustrates a block diagram of the controller 7 described later. Since FIG. 21 corresponds to FIGS. 2, 5, and 6, detailed description of FIG. 21 will be omitted.

The transmission mechanism 20 is connected to a crankshaft, not shown, of the engine 11. The transmission mechanism 20 changes a torque transferred from the crankshaft to a predetermined torque, and outputs the predetermined torque.

The clutch 40 is configured to transmit rotation of the crankshaft to the transmission mechanism 20. That is, the clutch 40 is configured to switch between transfer and non-transfer of rotation of the crankshaft to the transmission mechanism 20.

The shift mechanism 50 performs a gear-shift of the transmission mechanism 20 through a sequential shift mechanism 30 described later, and retains a gear stage selected by the transmission mechanism 20 until the next gear-shift is performed by the transmission mechanism 20.

As described above, a driving force is transferred to the transmission mechanism 20 of the multi-stage automatic transmission 12 from the engine 11 through the clutch 40.

The configuration of the multi-stage automatic transmission 12 including the transmission mechanism 20, the clutch 40, and the shift mechanism 50 will be described in detail.

The clutch 40 is, for example, a multiplate friction clutch. The clutch 40 includes a bottomed cylindrical clutch housing 41, a bottomed cylindrical clutch boss 42, a plurality of friction plates 43 and a plurality of clutch plates 44 that are friction discs, a pressure plate 45, and an input gear 46. The clutch 40 is not limited to a multiplate clutch as described in this embodiment. The clutch 40 may be an automatic centrifugal clutch using a centrifugal weight.

The clutch housing 41 is disposed concentrically with a main shaft 21 of the transmission mechanism 20 and is rotatable relative to the main shaft 21. A bottom portion of the bottomed cylindrical clutch housing 41 is connected to the input gear 46. The input gear 46 meshes with a gear (not shown) disposed on the crankshaft of the engine 11 to thereby rotate together with the gear. The clutch housing 41 and the input gear 46 rotate together with the crankshaft, and are rotatable with respect to the main shaft 21 of the transmission mechanism 20.

The plurality of friction plates 43 as ring-shaped thin plates are arranged inside the clutch housing 41. The plurality of friction plates 43 are arranged in the thickness direction inside the clutch housing 41. The plurality of friction plates 43 are attached to the inner peripheral surface of the clutch housing 41 to be rotatable together with the clutch housing 41 and displaceable with respect to the clutch housing 41 along the axial direction of the main shaft 21.

An end portion of the main shaft 21 penetrates the bottom portion of the clutch housing 41. A bottom portion of the clutch boss 42 is fixed to a front end portion of the main shaft 21 penetrating the clutch housing 41. Accordingly, the clutch boss 42 rotates together with the main shaft 21.

The clutch boss 42 is disposed inside the clutch housing 41. The plurality of clutch plates 44 as ring-shaped thin plates are disposed on an outer peripheral portion of the clutch boss 42. That is, the plurality of clutch plates 44 are attached to the outer peripheral surface of the clutch boss 42 to be rotatable together with the clutch boss 42 and displaceable with respect to the clutch boss 42 along the axial direction of the main shaft 21.

The plurality of friction plates 43 and the plurality of clutch plates 44 are alternately arranged along the axial direction of the main shaft 21.

The pressure plate 45 is a substantially disc-shaped member. The clutch housing 41, the clutch boss 42, and the pressure plate 45 are arranged in this order with respect to the main shaft 21 along the axial direction of the main shaft 21. The pressure plate 45 is disposed outside the main shaft 21 in the axial direction to face the clutch boss 42 in the axial direction. The pressure plate 45 is displaceable with respect to the clutch boss 42 along the axial direction of the main shaft 21. The pressure plate 45 is pressed by a clutch spring 47 toward the clutch boss 42.

As described above, when the pressure plate 45 is pressed toward the clutch boss 42, each of the friction plates 43 and each of the clutch plates 44 are thereby pushed against each other in the thickness direction. That is, the plurality of friction plates 43 and the plurality of clutch plates 44 are engaged with one another. As described above, while the plurality of friction plates 43 and the plurality of clutch plates 44 are engaged, the clutch boss 42 and the clutch housing 41 rotate together by friction between the friction plates 43 and the clutch plates 44. This state is an engaged state of the clutch 40.

In this engaged state of the clutch 40, rotation is allowed to be transferred from the clutch housing 41 to the clutch boss 42, that is, from the input gear 46 to the main shaft 21, through each of the friction plates 43 and each of the clutch plates 44.

A push rod 48 penetrates a center portion of the pressure plate 45 when seen in the axial direction of the main shaft 21. The push rod 48 is disposed to extend in the axial direction of the main shaft 21. That is, the axial direction of the push rod 48 coincides with the axial direction of the main shaft 21. A flange 48a is provided on one end of the push rod 48. The other end of the push rod 48 is connected to a rod 49. The rod 49 is rotatable about the axis by a clutch actuator 15. The clutch actuator 15 is controlled to be driven based on a clutch signal output from the controller 7.

The push rod 48 is configured to be movable along the axial direction of the main shaft 21 by rotation of the rod 49. In a case where the push rod 48 moves in a direction away from the main shaft 21 (rightward in FIG. 2), the pressure plate 45 receives a force in a direction away from the clutch boss 42 in the axial direction by the flange 48a of the push rod 48. Accordingly, the clutch spring 47 is deformed to be compressed. Thus, a force with which the pressure plate 45 pushes the friction plates 43 and the clutch plates 44 decreases.

Consequently, a contact pressure between the friction plates 43 and the clutch plates 44 decreases. In this manner, the friction plates 43 and the clutch plates 44 are disengaged, and the clutch boss 42 and the clutch housing 41 rotate relative to each other. This state is a disengaged state of the clutch 40.

That is, the clutch 40 is switched between the engaged state and the disengaged state by movement of the push rod 48 along the axial direction of the main shaft 21.

The pressure plate 45 is rotatable about the push rod 48 with a bearing 45a interposed therebetween. Accordingly, while the clutch 40 is in the engaged state, the pressure plate 45 rotates together with the clutch housing 41 and the clutch boss 42.

The transmission mechanism 20 is a multistep transmission mechanism. The transmission mechanism 20 includes the main shaft 21, an output shaft 22 disposed in parallel with the main shaft 21, a plurality of driving gears 23, a plurality of driven gears 24, and the sequential shift mechanism 30. The sequential shift mechanism 30 includes a shift cam 31, shift forks 32 through 34, and guide shafts 35 and 36 for guiding movement of the shift forks 32 through 34.

The main shaft 21 is provided with the plurality of driving gears 23. The plurality of driving gears 23 are transmission gears constituting part of the plurality of gear stages. On the other hand, the output shaft 22 is provided with the plurality of driven gears 24 always meshing with the plurality of driving gears 23. The plurality of driven gears 24 are transmission gears constituting part of the plurality of gear stages. The transmission mechanism 20 is a so-called gear-type transmission mechanism in which the plurality of driving gears 23 and the plurality of driven gears 24 always mesh with each other in a one-to-one relationship.

In the transmission mechanism 20, in accordance with the gear stage, the sequential shift mechanism 30 selects a combination of a driving gear 23 and a driven gear 24 for transferring a driving force among the plurality of driving gears 23 and the plurality of driven gears 24.

Specifically, a predetermined driving gear 23a in the plurality of driving gears 23 is fixed to the main shaft 21 in the rotation direction, while being movable along the axial direction of the main shaft 21. Predetermined driven gears 24a in the plurality of driven gears 24 are fixed to the output shaft 22 in the rotation direction, while being movable along the axial direction of the output shaft 22. Positions of the predetermined driving gear 23a and the predetermined driven gears 24a in the axial direction are determined by the sequential shift mechanism 30 in accordance with the gear stage.

The driving gears 23 except for the predetermined driving gear 23a in the plurality of driving gears 23 include driving gears 23 fixed to the main shaft 21 in the axial direction and rotatable with respect to the main shaft 21, and driving gears 23 fixed to the main shaft 21 in the axial direction and rotatable together with the main shaft 21. Driven gears 24 except for the predetermined driven gears 24a in the plurality of driven gears 24 are fixed to the output shaft 22 in the axial direction and rotatable with respect to the output shaft 22.

A configuration of the transmission mechanism 20 is similar to a configuration of a known transmission mechanism (e.g., Japanese Patent Application Publication No. 2015-117798), and thus, will not be described in detail.

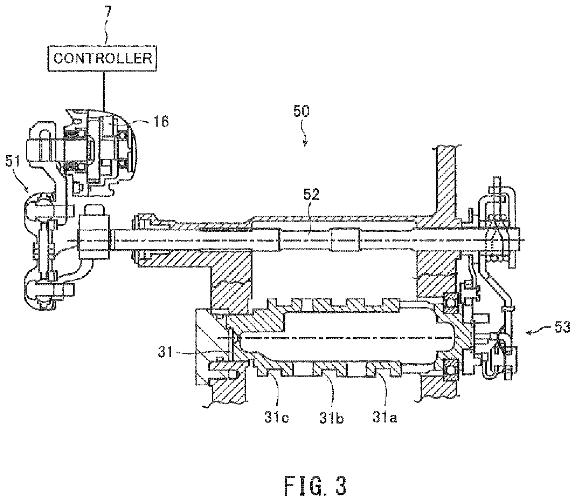

The sequential shift mechanism 30 includes the shift cam 31 and the shift forks 32 through 34. As illustrated in FIG. 3, cam grooves 31a through 31c are formed on the outer peripheral surface of the shift cam 31 of the sequential shift mechanism 30. The cam grooves 31a through 31c are arranged along the axial direction of the shift cam 31 such that each of the cam grooves 31a through 31c extends circumferentially on the outer peripheral surface of the shift cam 31. Configurations of the cam grooves 31a through 31c of this embodiment are similar to those of known cam grooves (e.g., Japanese Patent Application Publication No. 2015-117798), and thus, will not be described in detail. The cam grooves 31a through 31c are arranged on the outer peripheral surface of the shift cam 31 such that positions of the cam grooves 31a through 31c in the axial direction of the shift cam 31 change in accordance with the positions thereof in the circumferential direction of the shift cam 31. One end of each of the shift forks 32 through 34 is located in an associated one of the cam grooves 31a through 31c.

As illustrated in FIG. 2, the shift forks 32 through 34 are disposed on the guide shafts 35 and 36 parallel to the axis of the shift cam 31 and are movable along the axial direction of the guide shafts 35 and 36. The other end of each of the shift forks 32 through 34 is connected to the predetermined driving gear 23a and the predetermined driven gears 24a. Accordingly, when the shift cam 31 rotates, the shift forks 32 through 34 move in the axial direction of the shift cam 31 along the cam grooves 31a through 31c on the outer peripheral surface of the shift cam 31. Thus, with the rotation of the shift cam 31, positions of the predetermined driving gear 23a and the predetermined driven gears 24a in the axial direction are determined through the shift forks 32 through 34.

The predetermined driving gear 23a and the driving gear 23 adjacent to the predetermined driving gear 23a in the axial direction of the main shaft 21 respectively include dogs 23b and 23c that mesh with each other. Each of the predetermined driven gears 24a and the driven gear 24 adjacent to the predetermined driven gear 24a in the axial direction of the output shaft 22 respectively include dogs 24b and 24c that mesh with each other. As described above, with rotation of the shift cam 31, when the predetermined driving gear 23a moves along the axial direction through the shift fork 33, the dog 23b of the predetermined driving gear 23a meshes with the dog 23c of the driving gear 23 adjacent to the predetermined driving gear 23a in the axial direction of the main shaft 21. With the rotation of the shift cam 31, when each of the predetermined driven gears 24a move along the axial direction through its corresponding one of the shift forks 32 or 34, the dog 24b of the predetermined driven gear 24a meshes with the dog 24c of the driven gear 24 adjacent to the predetermined driven gear 24a in the axial direction of the output shaft 22.

Accordingly, a combination of the driving gear 23 and the driven gear 24 for transferring a driving force from the main shaft 21 to the output shaft 22 is selected. That is, in the transmission mechanism 20, in a case where the predetermined driving gear 23a moves along the axial direction through the shift fork 33 in accordance with rotation of the shift cam 31, the driving gear 23 associated with a specific gear stage (i.e., gear stage except for the predetermined gear stage) in the plurality of driving gears 23 is fixed to the main shaft 21 by the predetermined driving gear 23a to rotate together with the main shaft 21. On the other hand, in a case where the predetermined driven gear 24a moves along the axial direction through the shift forks 32 and 34 in accordance with rotation of the shift cam 31, the driven gear 24 associated with a specific gear stage (i.e., gear stage except for the predetermined gear stage) in the plurality of driven gears 24 is fixed to the output shaft 22 by the predetermined driven gear 24a to rotate together with the output shaft 22.

In the manner described above, only the driving gear 23 and the driven gear 24 associated with the specific gear stage in the transmission mechanism 20 transfer a driving force from the main shaft 21 to the output shaft 22. Accordingly, the transmission mechanism 20 transfers a driving force output from the engine 11 from the main shaft 21 to the output shaft 22 at a predetermined gear-shift ratio in each gear stage.

FIG. 3 illustrates a schematic configuration of the shift mechanism 50 of the multi-stage automatic transmission 12. The shift mechanism 50 causes the shift cam 31 of the transmission mechanism 20 to rotate in accordance with a gear-shift signal output from the controller 7. The shift mechanism 50 is driven by a shift actuator 16. The shift actuator 16 is controlled and driven based on a gear-shift signal output from the controller 7.

The shift mechanism 50 includes a shift rod 51, a shift shaft 52, and an intermittent feeder 53. A driving force of the shift actuator 16 is transferred to the shift rod 51. One end of the shift shaft 52 is connected to the shift rod 51, and the other end of the shift shaft 52 is connected to the shift cam 31 through the intermittent feeder 53. The shift actuator 16 causes the shift shaft 52 to rotate in a predetermined direction through the shift rod 51 based on a gear-shift signal output from the controller 7. This predetermined direction is switched in opposite directions between a shift-up (changing to a gear stage having a smaller gear-shift ratio) and a shift-down (changing to a gear stage having a larger gear-shift ratio).

The shift shaft 52 rotates with a driving force of the shift actuator 16 to thereby cause the shift cam 31 to rotate about the axis through the intermittent feeder 53. When the shift shaft 52 rotates in a predetermined direction, the intermittent feeder 53 causes the shift cam 31 to rotate by a certain angle in a rotation direction corresponding to the predetermined direction. A configuration of the intermittent feeder 53 is similar to a known configuration (e.g., Japanese Patent Application Publication No. 2015-117798). Thus, the configuration of the intermittent feeder 53 will not be described in detail.

With the configuration described above, when the shift actuator 16 is driven based on a gear-shift signal output from the controller 7, a driving force of the shift actuator 16 causes the shift shaft 52 to rotate in a predetermined direction through the shift rod 51. In accordance with the rotation direction of the shift shaft 52, the intermittent feeder 53 causes the shift cam 31 to rotate by a certain angle in a rotation direction corresponding to the predetermined direction.

Accordingly, in the transmission mechanism 20, the shift forks 32 through 34 move in the axial direction of the shift cam 31 along the cam grooves 31a through 31c on the shift cam 31. With such movement of the shift forks 32 through 34, the predetermined driving gear 23a and the driving gear 23 associated with the gear stage are engaged through the dogs 23b and 23c thereof, whereas one of the predetermined driven gears 24a and the driven gear 24 associated with the gear stage are engaged through the dogs 24b and 24c thereof. Consequently, a driving force can be transferred at a gear-shift ratio of each gear stage from the main shaft 21 to the output shaft 22 through the driving gear 23 and the driven gear 24 associated with the gear stage.

### <Controller>

The controller 7 controls driving of components of the vehicle 1, such as the engine unit 10, the front suspension 5, and the rear suspension 6. The controller 7 is, for example, an electric control unit (ECU). In this embodiment, the controller 7 generates a gear-shift signal for instructing changing of gear stages to the multi-stage automatic transmission 12, and outputs the gear-shift signal. The controller 7 of this embodiment obtains a driving force based on an engine speed and a detection result of the throttle opening degree detector 63, and controls driving of the multi-stage automatic transmission 12 based on the driving force and a detection result of the lean detector 61. That is, the controller 7 constitutes a gear-shift controller.

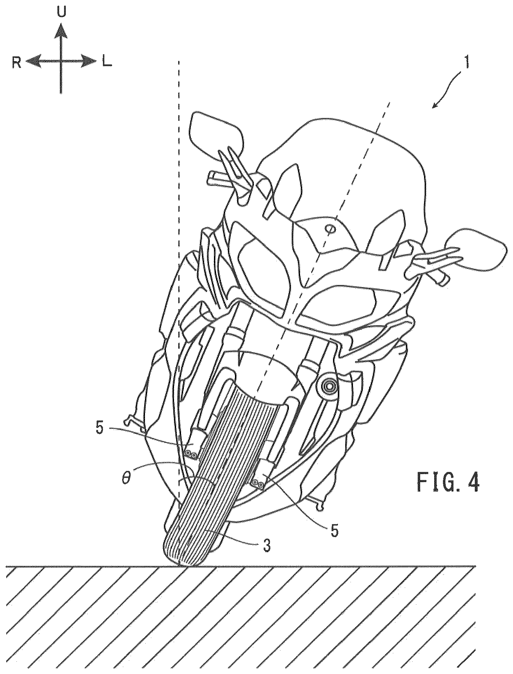

In this embodiment, the vehicle 1 leans leftward when turning to the left and leans rightward when turning to the right. FIG. 4 is a view of the vehicle 1 that turns leftward, when seen from the front. As illustrated in FIG. 4, while the vehicle 1 turns, the vehicle 1 leans at a predetermined lean angle θ with respect to a vertical axis (broken line in FIG. 4).

When the gear stage of the multi-stage automatic transmission 12 is changed with the vehicle 1 turning leftward while leaning to the left or with the vehicle 1 turning rightward while leaning to the right as described above, a driving force output from the engine unit 10 changes. Then, a force rotating in the forward direction or in the rearward direction about a rotation axis P extending in the left-right direction occurs in the vehicle 1.

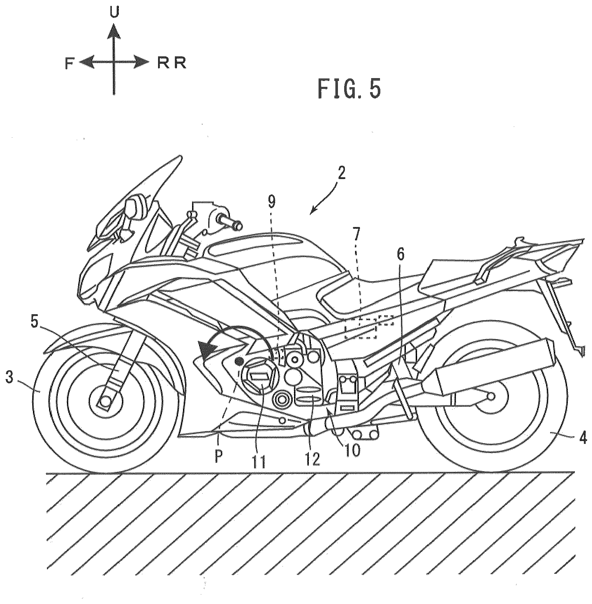

For example, when the clutch 40 of the multi-stage automatic transmission 12 is disengaged, a driving force transferred from the engine unit 10 to the rear wheel 4 decreases. Thus, a force of rotating forward about the rotation axis P is exerted on the vehicle 1. FIG. 5 illustrates an example of the case where a force of rotating forward about the rotation axis P is exerted on the vehicle 1. In the front-rear direction of the vehicle 1, the rotation axis P is located at the same position as the barycenter of the vehicle 1.

Thereafter, when the gear stage of the multi-stage automatic transmission 12 is changed and the clutch 40 is engaged, a driving force transferred from the engine unit 10 to the rear wheel 4 increases. Thus, a force of rotating rearward about the rotation axis P is exerted on the vehicle 1. In particular, in a shift-down of the multi-stage automatic transmission 12, a driving force transferred from the engine unit 10 to the rear wheel 4 rapidly increases. Thus, a larger force of rotating rearward about the rotation axis P is exerted on the vehicle 1.

When the force as described above is exerted on the vehicle 1, the posture of the vehicle 1 in turning changes. Accordingly, a change occurs in the travel line as a trajectory on which the vehicle 1 travels in turning.

Therefore, if a change of the travel line of the vehicle 1 is predicted while the vehicle 1 that rotates about the rotation axis P by changing the gear stages in the multi-stage automatic transmission 12 turns in the lean state, the controller 7 of this embodiment inhibits changing of the gear stages in the multi-stage automatic transmission 12.

FIG. 6 is a block diagram illustrating a schematic configuration of the controller 7. The controller 7 includes a driving force calculator 71, a lean angle calculator 72, a gear-shift control determiner 73, a gear-shift signal generator 74, and a memory 75.

The driving force calculator 71 obtains a driving force output from the engine unit 10 from driving force data previously stored in the memory 75, by using information on the gear stage of the multi-stage automatic transmission 12, an engine speed detected by the engine speed detector 62, and a throttle opening degree detected by the throttle opening degree detector 63. The information on the gear stage uses, for example, a gear-shift signal output from the gear-shift signal generator 74 of the controller 7.

The driving force data is a map showing a relationship among the engine speed, the throttle opening degree, and the driving force, and includes, for example, data indicating a relationship among the engine speed, the throttle opening degree, and an output torque of a crankshaft 11a.

FIG. 7 illustrates an example of the driving force data. FIG. 7 is a graph showing a relationship among the engine speed, the throttle opening degree, and the output torque (torque in FIG. 7) of the crankshaft 11a. For example, in FIG. 7, the output torque of the crankshaft 11a obtained from the engine speed and the throttle opening degree is multiplied by a gear-shift ratio included in the information on the gear stage and the outer diameter of the rear wheel 4, thereby obtaining a driving force.

The lean angle calculator 72 calculates a lean angle from the lean angular velocity of the vehicle 1 detected by the lean detector 61.

The gear-shift control determiner 73 determines whether to change the gear stages in the multi-stage automatic transmission 12 or not from the gear-shift control determination data previously stored in the memory 75, by using the driving force obtained by the driving force calculator 71 and the lean angle of the vehicle 1 calculated by the lean angle calculator 72.

The gear-shift control determination data is data for determining whether changing of the gear stages in the multi-stage automatic transmission 12 is to be permitted or inhibited. That is, the gear-shift control determination data is data for determining whether the travel line of the vehicle 1 changes or not in the case of changing the gear stages in the multi-stage automatic transmission 12. Based on the gear-shift control determination data, the gear-shift control determiner 73 inhibits changing of the gear stages if a change of the travel line of the vehicle 1 by changing the gear stages in the multi-stage automatic transmission 12 is predicted, and permits changing of the gear stages if no-change of the travel line of the vehicle 1 by changing the gear stages is predicted.

More specifically, the gear-shift control determination data includes information on a range where changing of the gear stages in the multi-stage automatic transmission 12 is permitted and information on a range where changing of the gear stages is inhibited, in the relationship between the lean angle of the vehicle 1 and the driving force.

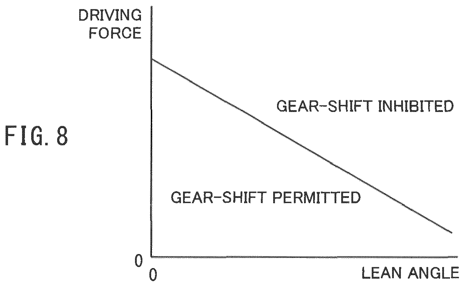

In this embodiment, as illustrated in the example in FIG. 8, the gear-shift control determination data includes data on a threshold between a range where changing of the gear stages in the multi-stage automatic transmission 12 is permitted (i.e., a range of "gear-shift permitted" in FIG. 8) and a range where the changing of the gear stages is inhibited (i.e., a range of "gear-shift inhibited" in FIG. 8) on the graph whose abscissa represents the lean angle of the vehicle 1 and the ordinate represents a driving force.

In the gear-shift control determination data, as the lean angle increases, the threshold of a driving force for inhibiting changing of the gear stages decreases. While the vehicle 1 turns in the lean state, the influence of changing of the gear stages in the multi-stage automatic transmission 12 with respect to a change of the travel line of the vehicle 1 varies in accordance with the lean angle of the vehicle 1. As in the configuration described above, changing of the threshold of the driving force for inhibiting changing of the gear stages in accordance with the lean angle of the vehicle 1 further ensures reduction of a change of the travel line occurring in the leaning vehicle while the leaning vehicle turns in the lean state.

A change of the driving force is related to a change of the travel line of the vehicle 1. Thus, when the threshold of the driving force is changed as described above, the range where the change of the travel line of the vehicle 1 is permitted varies. That is, by changing the threshold of the driving force as described above, the range of a change of the travel line where changing of the gear stages in the multi-stage automatic transmission 12 is inhibited is changed in accordance with the lean angle.

The gear-shift control determiner 73 determines whether to change the gear stages in the multi-stage automatic transmission 12 from a driving force obtained by the driving force calculator 71 and a lean angle of the vehicle 1 calculated by the lean angle calculator 72 by using gear-shift control determination data as described above, and outputs a result of the determination as a gear-shift control determination signal.

If the gear-shift control determination signal output from the gear-shift control determiner 73 is a signal for permitting changing of the gear stages in the multi-stage automatic transmission 12, the gear-shift signal generator 74 generates a gear-shift signal in accordance with the vehicle speed, the engine speed, and the throttle opening degree of the vehicle 1. The gear-shift signal generated by the gear-shift signal generator 74 is output to the multi-stage automatic transmission 12. In the multi-stage automatic transmission 12, driving of the clutch actuator 15 and the shift actuator 16 is controlled based on the gear-shift signal.

If the gear-shift control determination signal output from the gear-shift control determiner 73 is a signal for inhibiting changing of the gear stages in the multi-stage automatic transmission 12, the gear-shift signal generator 74 does not generate a gear-shift signal.

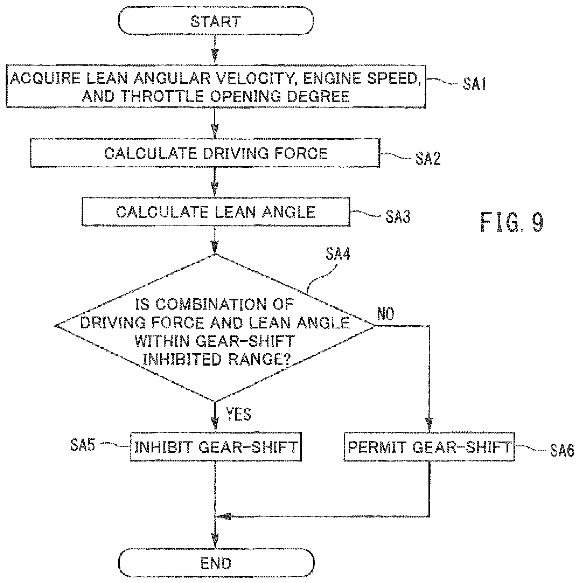

Next, gear-shift control by the controller 7 having the configuration as described above will be described. FIG. 9 depicts an operation flow of gear-shift control by the controller 7.

When the flow depicted in FIG. 9 starts, the controller 7 first acquires a lean angular velocity of the vehicle 1 detected by the lean detector 61, data of an engine speed detected by the engine speed detector 62, and data of a throttle opening degree detected by the throttle opening degree detector 63 (step SA1).

The driving force calculator 71 of the controller 7 obtains a driving force from driving force data stored in the memory 75, by using the acquired data of the engine speed and the acquired data of the throttle opening degree (step SA2). At this time, the driving force calculator 71 also acquires information on the gear stage of the multi-stage automatic transmission 12, and obtains a driving force by using driving force data associated with the gear stage in the driving force data stored in the memory 75.

Subsequently, the lean angle calculator 72 of the controller 7 calculates a lean angle of the vehicle 1 by using the acquired lean angular velocity (step SA3). The calculation of the lean angle by the lean angle calculator 72 may be performed before calculation of a driving force by the driving force calculator 71 or may be performed at the same time as calculation of the driving force by the driving force calculator 71.

Thereafter, the gear-shift control determiner 73 of the controller 7 determines whether to change the gear stages in the multi-stage automatic transmission 12 from the gear-shift control determination data stored in the memory 75, by using the driving force and the lean angle (step SA4).

The gear-shift control determination data is data for determining whether changing of the gear stages in the multi-stage automatic transmission 12 is to be permitted or inhibited. That is, the gear-shift control determination data is data for determining whether the travel line of the vehicle 1 changes or not in the case of changing the gear stages in the multi-stage automatic transmission 12.

Based on the driving force and the lean angle, the gear-shift control determiner 73 determines whether the travel line of the vehicle 1 changes or not in the case of changing the gear stages in the multi-stage automatic transmission 12. If a change of the travel line of the vehicle 1 is predicted, the gear-shift control determiner 73 inhibits a gear-shift of the multi-stage automatic transmission 12, whereas if no-change of the travel line of the vehicle 1 is predicted, the gear-shift control determiner 73 permits a gear-shift of the multi-stage automatic transmission 12.

In this embodiment, the gear-shift control determiner 73 determines whether a combination of the driving force and the lean angle in the gear-shift control determination data is within the gear-shift inhibited range where a gear-shift of the multi-stage automatic transmission 12 is inhibited or within the gear-shift permitted range where a gear-shift of the multi-stage automatic transmission 12 is permitted.

In step SA4, if the combination of the driving force and the lean angle is within the gear-shift inhibited range where a gear-shift of the multi-stage automatic transmission 12 is inhibited (YES), the process proceeds to step SA5, and a gear-shift of the multi-stage automatic transmission 12 is inhibited. At this time, the gear-shift control determiner 73 generates a gear-shift control determination signal for inhibiting a gear-shift of the multi-stage automatic transmission 12 and outputs the signal.

On the other hand, if it is determined that the combination of the driving force and the lean angle is not within the gear-shift inhibited range where a gear-shift of the multi-stage automatic transmission 12 is inhibited (NO), that is, if it is determined that the combination is within the gear-shift permitted range where a gear-shift of the multi-stage automatic transmission 12 is permitted, the process proceeds to step SA6, and a gear-shift of the multi-stage automatic transmission 12 is permitted. In step SA6, the gear-shift control determiner 73 generates a gear-shift control determination signal for permitting a gear-shift of the multi-stage automatic transmission 12, and outputs the signal.

After the processes in steps SA5 and SA6, this flow is finished.

As described above, the controller 7 inhibits changing of the gear stages in the multi-stage automatic transmission 12 based on the driving force and the lean angle of the vehicle 1 with which a change of the travel line of the vehicle 1 is predicted while the vehicle 1 that rotates about the rotation axis P extending in the left-right direction by a changing of the gear stages in the multi-stage automatic transmission 12 turns in the lean state.

Accordingly, while the vehicle 1 turns in the lean state, it is possible to reduce a change of the travel line of the vehicle 1 that is caused by rotation of the vehicle 1 about the rotation axis P extending in the left-right direction.

### (Variation of First Embodiment)

In the first embodiment, if a change of the travel line of the vehicle 1 by a changing of the gear stages in the multi-stage automatic transmission 12 is predicted, the controller 7 inhibits changing of the gear stages.

Alternatively, if a change of the travel line of the vehicle 1 by a changing of the gear stages in the multi-stage automatic transmission 12 is predicted, the controller 7 may suppress the change of the driving force by a changing of the gear stages. That is, the controller 7 may permit changing of the gear stages in the multi-stage automatic transmission 12 so as to suppress a change of the driving force. For example, the controller 7 may permit changing of the gear stages in the multi-stage automatic transmission 12 such that a change of the lean angle of the vehicle 1 is less than or equal to a predetermined value with which the change of the lean angle of the vehicle 1 does not affect traveling of the vehicle 1.

Specifically, the controller 7 may reduce a speed in disengaging the clutch 40 (disengaging speed) as compared to that in a normal gear-shift, in changing the gear stages in the multi-stage automatic transmission 12. The controller 7 may also reduce the speed in engaging the disengaged clutch 40 as compared to that in the normal gear-shift, in changing the gear stages in the multi-stage automatic transmission 12. Accordingly, it is possible to prevent a rapid change of a driving force in changing the gear stages in the multi-stage automatic transmission 12. The normal gear-shift refers to a gear-shift performed at a gear-shift timing determined based on the vehicle speed and the throttle opening degree in a case where a change of the travel line of the vehicle is not predicted.

The controller 7 may disengage the clutch of the multi-stage automatic transmission 12 after having reduced a driving force by reducing an output of the engine 11, in changing the gear stages in the multi-stage automatic transmission 12. Accordingly, it is possible to prevent a rapid change of a driving force in changing the gear stages in the multi-stage automatic transmission 12.

The control of the controller 7 as described above can reduce a change of the travel line of the vehicle 1 that is caused by rotating forward or rearward about the rotation axis P extending in the left-right direction, while the vehicle 1 turns in the lean state.

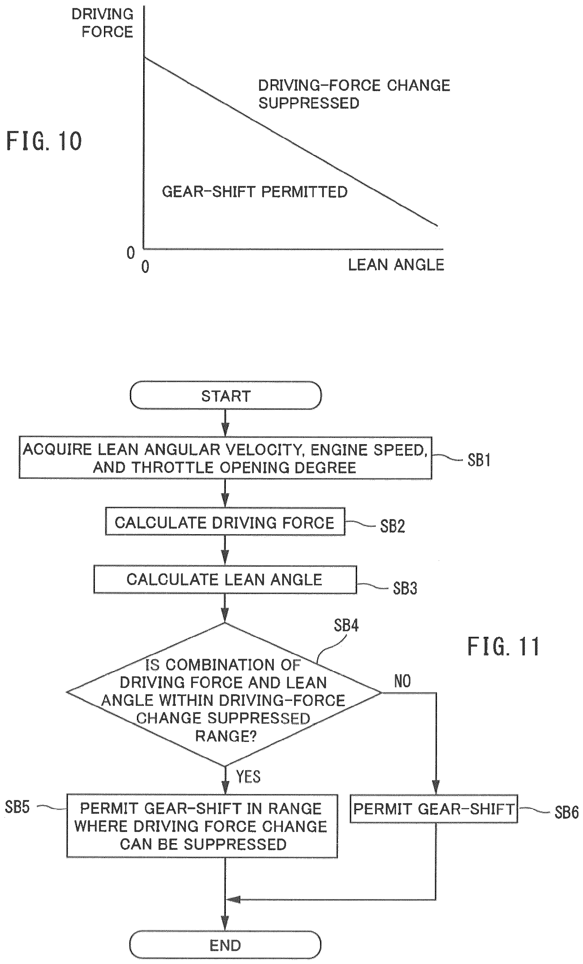

FIG. 10 shows the gear-shift permitted range where a gear-shift of the multi-stage automatic transmission 12 is permitted and a driving-force change suppressed range where a gear-shift is performed with a driving force suppressed, in a relationship between a lean angle and a driving force of the vehicle 1. FIG. 11 depicts a flow of gear-shift control of the controller 7 according to this variation. In FIG. 11 steps SB1 through SB3 are the same as steps SA1 through SA3 of the first embodiment, and will not be described in detail.

As shown in FIG. 10, in this variation, the gear-shift control determination data is data for determining permission of changing of the gear stages and permission of only changing of the gear stages for which a change of a driving force can be suppressed, in the multi-stage automatic transmission 12.

In the gear-shift control determination data, as the lean angle increases, the threshold of a driving force that permits only changing of the gear stages capable of suppressing a change of the driving force decreases. While the vehicle turns in the lean state, influence of changing of the gear stages in the multi-stage automatic transmission 12 with respect to a change of the travel line of the vehicle varies in accordance with the lean angle of the vehicle. As in the configuration described above, the threshold of the driving force that permits only changing of the gear stages capable of suppressing a change of the driving force is changed in accordance with the lean angle of the vehicle. Accordingly, while the vehicle turns in the lean state, a change of the travel line of the vehicle can be more reliably reduced.

A change of the driving force is related to a change of the travel line of the vehicle. Thus, by changing the threshold of the driving force as described above, the range where a change of the travel line of the vehicle is permitted varies. That is, by changing the threshold of the driving force as described above, the range of a change of the travel line in which a change of a driving force is suppressed by a changing of the gear stages in the multi-stage automatic transmission 12 is changed in accordance with the lean angle.

The controller 7 determines permission of changing of the gear stages and permission of changing of the gear stages capable of suppressing a change of a driving force from the gear-shift control determination data, by using the driving force obtained by the driving force calculator 71 and the lean angle of the vehicle 1 calculated by the lean angle calculator 72. The controller 7 generates a gear-shift signal in accordance with the determination results.

Specifically, as shown in the flow of FIG. 11, in step SB4, the controller 7 determines whether or not a combination of the driving force obtained in step SB2 and a lean angle obtained in step SB3 is within the driving-force change suppressed range in FIG. 10.

If it is determined that the combination of the driving force and the lean angle is within the driving-force change suppressed range (YES in step SB4), the process proceeds to step SB5, and the controller 7 performs changing of the gear stages in the multi-stage automatic transmission 12 in a range where a driving force can be suppressed. On the other hand, if it is determined that the combination of the driving force and the lean angle is not within the driving-force change suppressed range (NO in step SB4), the process proceeds to step SB6, and the controller 7 performs changing of the gear stages in the multi-stage automatic transmission 12.

The configuration described above can reduce a change of the travel line of the vehicle 1 that is caused by rotating forward or rearward about the rotation axis P extending in the left-right direction of the vehicle 1, while the vehicle 1 turns in the lean state.

The controller 7 may switch between inhibition of changing of the gear stages as described in the first embodiment and suppression of a change of a driving force by changing the gear stages as described above, in accordance with the vehicle state. The controller 7 may also perform both inhibition of changing of the gear stages of the multi-stage automatic transmission 12 and suppression of a change of a driving force by changing the gear stages. For example, the controller 7 may inhibit changing of the gear stages at a predetermined gear stage and permits changing of the gear stages and suppress a driving force change at another gear stage. The suppression of change of a driving force by changing the gear stages includes inhibition of changing of the gear stages in the multi-stage automatic transmission 12. The vehicle state refers to, for example, a posture and a driving state of the vehicle 1 while the vehicle 1 turns in the lean state. Specifically, the vehicle state includes an operating state of the front suspension 5 displaceably supporting the front wheel 3 to the vehicle body 2, an operating state of the rear suspension 6 displaceably supporting the rear wheel 4 to the vehicle body 2, and a driving force that is transferred from the engine 11 to at least one of the front wheel 3 or the rear wheel 4 through the multi-stage automatic transmission 12. Operating states of the suspensions include, for example, a physical quantity and a state concerning operation of the suspensions, such as an extension/contraction amount of the suspensions, and an extension state or a contraction state of the suspensions.

### (Second Embodiment)

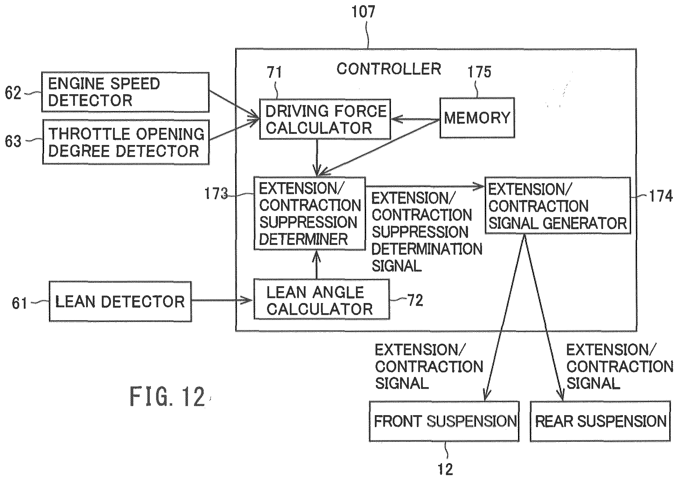

FIG. 12 illustrates a schematic configuration of a controller 107 of a vehicle according to a second embodiment. The controller 107 according to this embodiment is different from the configuration of the first embodiment in that in a case where a change of the travel line of a vehicle 1 by a changing of the gear stages in a multi-stage automatic transmission 12 is predicted while the vehicle 1 turns in the lean state, the controller 107 suppresses extension and contraction of at least one of a front suspension 5 or a rear suspension 6, instead of inhibiting changing of the gear stages in the multi-stage automatic transmission 12. In the following description, components similar to those of the first embodiment are denoted by the same reference characters and will not be described again, and only components different from those of the first embodiment will be described.

### <Front Suspension and Rear Suspension>

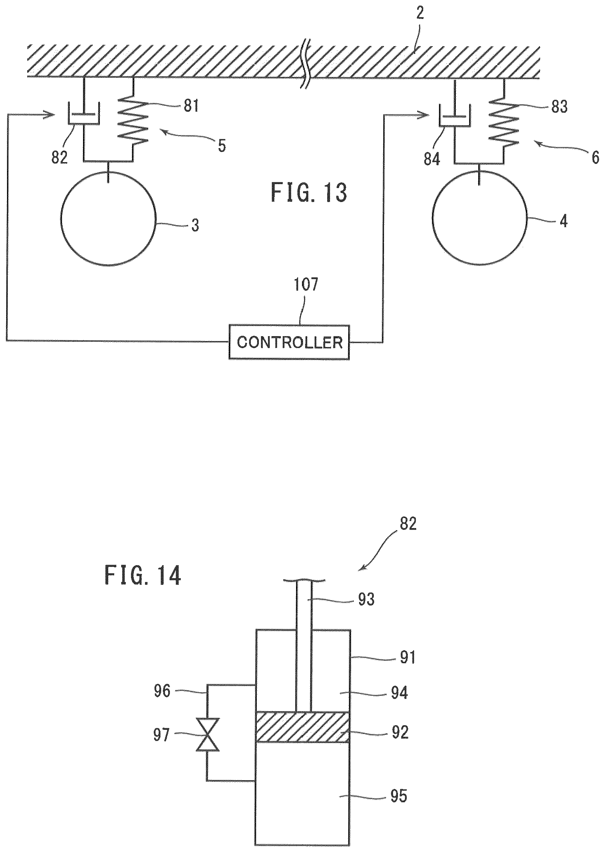

First, configurations of the front suspension 5 and the rear suspension 6 will be described in detail. FIG. 13 schematically illustrates configurations of the front suspension 5 and the rear suspension 6.

As illustrated in FIG. 13, the front suspension 5 includes a spring 81 elastically supporting a vehicle body 2 to a front wheel 3, and a damper 82 that generates a damping force to an upward movement or a downward movement of the vehicle body 2 and the front wheel 3. In the front suspension 5, the spring 81 and the damper 82 are disposed in parallel to each other. That is, the spring 81 and the damper 82 are disposed in parallel between the vehicle body 2 and the front wheel 3.

The rear suspension 6 includes a spring 83 elastically supporting the vehicle body 2 to a rear wheel 4, and a damper 84 that generates a damping force to an upward movement or a downward movement of the vehicle body 2 and the rear wheel 4. In the rear suspension 6, the spring 83 and the damper 84 are disposed in parallel to each other. That is, the spring 83 and the damper 84 are disposed in parallel between the vehicle body 2 and the rear wheel 4.

FIG. 14 illustrates a schematic configuration of the damper 82 of the front suspension 5. A schematic configuration of the damper 84 of the rear suspension 6 is the same as the schematic configuration of the damper 82, and will not be described again.

As illustrated in FIG. 14, the damper 82 includes a bottomed tubular cylinder 91 filled with hydraulic oil, a piston 92 that slides with respect to the inner surface of the cylinder 91, and a piston rod 93 connected to the piston 92. In the damper 82, the piston rod 93 is connected to the vehicle body 2, whereas the cylinder 91 is connected to the front wheel 3. The internal space of the cylinder 91 is divided into two spaces 94 and 95 by the piston 92. Each of the spaces 94 and 95 is filled with hydraulic oil. In the damper 82, the piston rod 93 may be connected to the front wheel 3 with the cylinder 91 connected to the vehicle body 2.

The damper 82 further includes an orifice passage 96 connecting the two spaces 94 and 95 formed inside the cylinder 91 to each other, and a regulating valve 97 capable of adjusting the opening degree of the orifice passage 96.

Since the orifice passage 96 connects the spaces 94 and 95 to each other as described above, when the piston 92 moves in the cylinder 91, hydraulic oil moves in the two spaces 94 and 95 inside the cylinder 91. Accordingly, with relative movement of the vehicle body 2 and the front wheel 3, when the piston 92 moves in the cylinder 91, a damping force occurs. The orifice passage 96 may be disposed in the cylinder 91 or in the piston 92.

Since the regulating valve 97 is disposed in the orifice passage 96, the flow rate of hydraulic oil in the orifice passage 96 can be adjusted. That is, by adjusting the opening degree of the regulating valve 97 disposed in the orifice passage 96, the flow rate of hydraulic oil flowing between the spaces 94 and 95 through the orifice passage 96 can be adjusted. Accordingly, a damping force occurring in the damper 82 can be adjusted by adjusting the opening degree of the regulating valve 97.

The damper 82 includes an actuator for driving a valve body, not shown, of the regulating valve 97. The opening degree of the regulating valve 97 can be adjusted by supplying a current to the actuator.

In this embodiment, the regulating valve 97 is, but not limited to, an area control valve for controlling a channel area of the orifice passage 96, and may have any configuration capable of adjusting the flow rate of hydraulic oil, such as a pressure control valve for controlling the pressure.

A damping force occurring in the damper 82 of the front suspension 5 is controlled by the controller 107, as illustrated in FIG. 13. The controller 107 controls the opening degree of the regulating valve 97 of the damper 82.

The configuration of the controller 107 will be described later, and in a case where a change of the travel line of the vehicle in changing the gear stages in the multi-stage automatic transmission 12 is predicted, the controller 107 controls the opening degrees of the regulating valves 97 of the dampers 82 and 84 to thereby suppress extension and contraction of at least one of the front suspension 5 or the rear suspension 6.

### <Controller>

The controller 107 is, for example, an ECU, as in the controller 7 of the first embodiment. In the second embodiment, the controller 107 generates an extension/contraction signal for instructing suppression of extension and contraction of at least one of the front suspension 5 or the rear suspension 6, and outputs the signal. The controller 107 of this embodiment obtains a driving force based on an engine speed and a detection result of a throttle opening degree detector 63, and based on this driving force and a detection result of a lean detector 61, controls driving of at least one of the front suspension 5 or the rear suspension 6. That is, in the case where a change of the travel line of the vehicle by changing the gear stages in the multi-stage automatic transmission 12 is predicted, the controller 107 of this embodiment controls extension and contraction of at least one of the front suspension 5 or the rear suspension 6.

Specifically, as illustrated in FIG. 12, the controller 107 includes a driving force calculator 71, a lean angle calculator 72, an extension/contraction suppression determiner 173, an extension/contraction signal generator 174, and a memory 175. Configurations of the driving force calculator 71 and the lean angle calculator 72 are similar to those of the first embodiment, and thus, will not be described in detail.

The extension/contraction suppression determiner 173 determines whether extension and contraction of at least one of the front suspension 5 or the rear suspension 6 needs to be suppressed or not from extension/contraction suppression determination data previously stored in the memory 175, by using a driving force obtained by the driving force calculator 71 and a lean angle of the vehicle calculated by the lean angle calculator 72.

The extension/contraction suppression determination data is data for determining whether extension and contraction of at least one of the front suspension 5 or the rear suspension 6 needs to be suppressed or not. That is, the extension/contraction suppression determination data is similar to the gear-shift control determination data of the first embodiment, and is data for determining whether the travel line of the vehicle changes or not in the case of changing the gear stages in the multi-stage automatic transmission 12. Based on the extension/contraction suppression determination data, the extension/contraction suppression determiner 173 suppresses extension and contraction of at least one of the front suspension 5 or the rear suspension 6 if a change of the travel line of the vehicle by a changing of the gear stages in the multi-stage automatic transmission 12 is predicted, and does not suppress extension and contraction of the front suspension 5 and the rear suspension 6 if no-change of the travel line of the vehicle by changing the gear stages is predicted.

More specifically, the extension/contraction suppression determination data includes information on a range where extension and contraction of the front suspension 5 and the rear suspension 6 are not suppressed and information on a range where extension and contraction of at least one of the front suspension 5 or the rear suspension 6 are suppressed, in a relationship between the lean angle and the driving force of the vehicle.

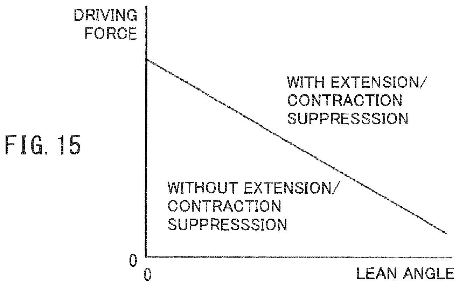

In this embodiment, as illustrated in an example of FIG. 15, the extension/contraction suppression determination data includes data that defines a range where extension and contraction of the front suspension 5 and the rear suspension 6 are not suppressed ("without extension and contraction suppression" range in FIG. 15) and a range where extension and contraction of at least one of the front suspension 5 or the rear suspension 6 are suppressed ("with extension and contraction suppression" range in FIG. 15), in the graph whose abscissa represents the lean angle of the vehicle and ordinate represents the driving force.

In the extension/contraction suppression determination data, as the lean angle increases, the threshold for a driving force for suppressing extension and contraction of at least one of the front suspension 5 or the rear suspension 6 decreases. While the vehicle turns in the lean state, influence of changing of the gear stages in the multi-stage automatic transmission 12 with respect to a change of the travel line of the vehicle varies in accordance with the lean angle of the vehicle. As in the configuration described above, the threshold for the driving force for suppressing extension and contraction of at least one of the front suspension 5 or the rear suspension 6 is changed in accordance with the lean angle of the vehicle so that a change of the travel line occurring in the vehicle can thereby be reduced more reliably while the vehicle turns in the lean state.

A change of the driving force is related to a change of the travel line of the vehicle. Thus, by changing the threshold of the driving force as described above, the range where a change of the travel line of the vehicle is permitted varies. That is, by changing the threshold for the driving force as described above, the range of change of the travel line where extension and contraction of at least one of the front suspension 5 or the rear suspension 6 are suppressed is changed in accordance with the lean angle.

By using the extension/contraction suppression determination data as described above, the extension/contraction suppression determiner 173 determines whether to suppress extension and contraction of at least one of the front suspension 5 or the rear suspension 6 from a driving force obtained by the driving force calculator 71 and a lean angle of the vehicle 1 calculated by the lean angle calculator 72, and outputs a determination result as an extension/contraction suppression determination signal.

If the extension/contraction suppression determination signal output from the extension/contraction suppression determiner 173 is a signal for not suppressing extension and contraction of the front suspension 5 and the rear suspension 6, the extension/contraction signal generator 174 generates an extension/contraction signal in accordance with, for example, a vehicle speed and a driving force of the vehicle. The extension/contraction signal generated by the extension/contraction signal generator 174 is output to the front suspension 5 and the rear suspension 6. In each of the front suspension 5 and the rear suspension 6, driving of the actuator of the damper is controlled based on the extension/contraction signal.

If the extension/contraction suppression determination signal output from the extension/contraction suppression determiner 173 is a signal for suppressing extension and contraction of at least one of the front suspension 5 or the rear suspension 6, the extension/contraction signal generator 174 generates an extension/contraction signal for suppressing extension and contraction of at least one of the front suspension 5 or the rear suspension 6 in accordance with, for example, a vehicle speed and a driving force of the vehicle.

The signal for suppressing the extension and contraction includes a signal for suppressing extension and contraction of at least the front suspension 5 in a case where the extension/contraction suppression determiner 173 predicts a change of the travel line of the vehicle that is caused by rotating forward about the rotation axis extending in the left-right direction based on, for example, the driving force. The signal for suppressing the extension and contraction includes a signal for suppressing extension and contraction of at least the rear suspension 6 in a case where the extension/contraction suppression determiner 173 predicts a change of the travel line of the vehicle that is caused by rotating rearward about the rotation axis based on, for example, the driving force.

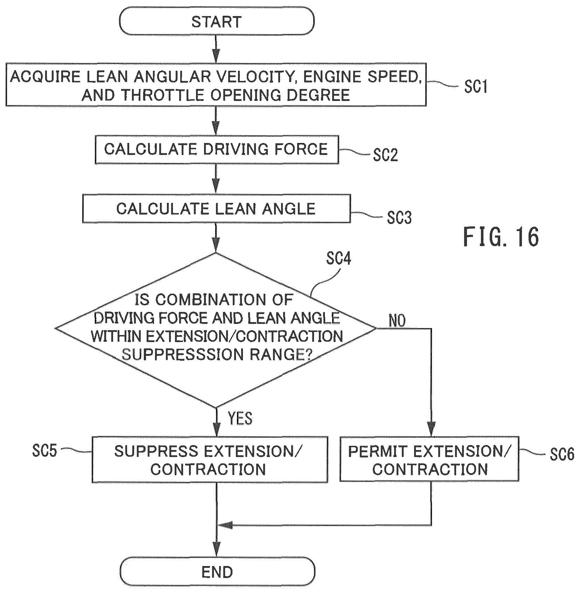

FIG. 16 shows a flow of an extension and contraction suppression operation of the controller 107 according to this embodiment. In FIG. 16, steps SC1 through SC3 are the same as steps SA1 through SA3 of the first embodiment, and will not be described in detail.

As depicted by the flow in FIG. 16, in step SC4, the controller 107 determines whether a combination of a driving force obtained in step SC2 and a lean angle obtained in step SC3 is within a range with extension and contraction suppression (hereinafter referred to as an extension and contraction suppression range) in FIG. 15. If the combination of the driving force and the lean angle is within the extension and contraction suppression range (YES in step SC4), the process proceeds to step SC5, and the controller 107 performs extension and contraction suppression of at least one of the front suspension 5 or the rear suspension 6.

On the other hand, if it is determined that the combination of the driving force and the lean angle is not within the extension and contraction suppression range (NO in step SC4), the process proceeds to step SC6, and the controller 107 performs normal driving control (extension and contraction permission) without performing extension and contraction suppression of the front suspension 5 and the rear suspension 6.

In the manner described above, the controller 107 predicts whether or not the travel line of the vehicle 1 that rotates about the rotation axis extending in the left-right direction by a changing of the gear stages in the multi-stage automatic transmission 12 changes based on the driving force and the lean angle of the vehicle while the vehicle turns in the lean state, and if a change of the travel line of the vehicle 1 is predicted, the controller 107 suppresses extension and contraction of at least one of the front suspension 5 or the rear suspension 6.

Accordingly, while the vehicle turns in the lean state, a change of the travel line of the vehicle that is caused by rotating about the rotation axis extending in the left-right direction can be reduced.

### (Third Embodiment)

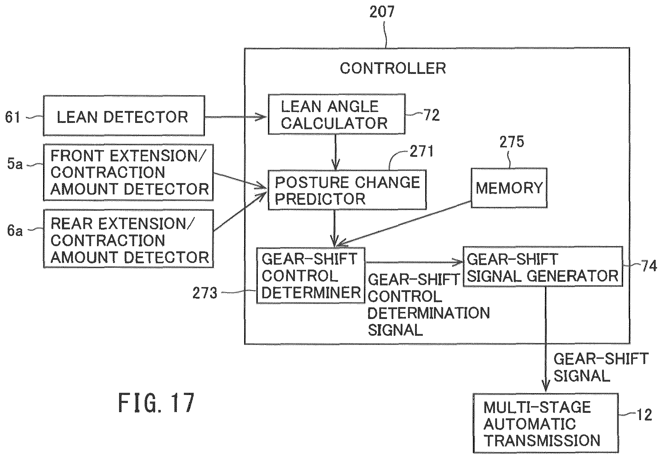

FIG. 17 illustrates a schematic configuration of a controller 207 of a vehicle according to a third embodiment. The controller 207 of this embodiment is different from the configuration of the first embodiment in that a change of a travel line of a vehicle by a changing of the gear stages in a multi-stage automatic transmission 12 is predicted while the vehicle turns in a lean state, based on an extension/contraction amount of a front suspension 5 or a rear suspension 6. In the following description, components similar to those of the first embodiment are denoted by the same reference characters and will not be described again, and only components different from those of the first embodiment will be described.

The controller 207 is, for example, an ECU, as in the controller 7 of the first embodiment. In the third embodiment, the controller 207 predicts that the travel line of a vehicle 1 changes by a changing of the gear stages in the multi-stage automatic transmission 12 while the vehicle 1 turns in a lean state, based on an extension/contraction amount of at least one of the front suspension 5 or the rear suspension 6. In a manner similar to the first embodiment, if a change of the travel line of the vehicle 1 by a changing of the gear stages in the multi-stage automatic transmission 12 is predicted while the vehicle 1 turns in the lean state, the controller 207 of this embodiment inhibits changing of the gear stages in the multi-stage automatic transmission 12.

The controller 207 may suppress a change of the driving force by a changing of the gear stages in the multi-stage automatic transmission 12 if the change of the travel line of the vehicle 1 is predicted, in a manner similar to the variation of the first embodiment. The controller 207 may suppress extension and contraction of at least one of the front suspension 5 or the rear suspension 6 if the change of the travel line of the vehicle 1 is predicted, in a manner similar to the second embodiment.

As illustrated in FIG. 17, the controller 207 includes a posture change predictor 271, a lean angle calculator 72, a gear-shift control determiner 273, a gear-shift signal generator 74, and a memory 275. The lean angle calculator 72 and the gear-shift signal generator 74 have configurations similar to those in the first embodiment, and thus, will not be described in detail. An extension/contraction amount of the front suspension 5 is detected by a front extension/contraction amount detector 5a. The front extension/contraction amount detector 5a is disposed in the front suspension 5. An extension/contraction amount of the rear suspension 6 is detected by a rear extension/contraction amount detector 6a. The rear extension/contraction amount detector 6a is disposed in the rear suspension 6.

The posture change predictor 271 acquires a lean angle of the vehicle from the lean detector 61, and determines whether the vehicle turns in the lean state or not, based on the lean angle. The posture change predictor 271 predicts a change of the travel line occurring by a posture change of the vehicle while the vehicle turns in the lean state, by using at least one of a detection result of the front extension/contraction amount detector 5a for detecting the extension/contraction amount of the front suspension 5 or a detection result of the rear extension/contraction amount detector 6a for detecting the extension/contraction amount of the rear suspension 6.

Specifically, the posture change predictor 271 predicts that the travel line of the vehicle 1 changes by a changing of the gear stages in the multi-stage automatic transmission 12 while the vehicle 1 turns in the lean state, if an extension amount of the front suspension 5 detected by the front extension/contraction amount detector 5a is greater than or equal to a front extension/contraction amount threshold or if a contraction amount of the rear suspension 6 detected by the rear extension/contraction amount detector 6a is greater than or equal to a rear extension/contraction amount threshold.

On the other hand, the posture change predictor 271 predicts that the travel line of the vehicle 1 does not change by a changing of the gear stages in the multi-stage automatic transmission 12 while the vehicle 1 turns in the lean state, if the extension amount of the front suspension 5 detected by the front extension/contraction amount detector 5a is less than the front extension/contraction amount threshold or if the contraction amount of the rear suspension 6 detected by the rear extension/contraction amount detector 6a is less than the rear extension/contraction amount threshold. The front extension/contraction amount threshold and the rear extension/contraction amount threshold are stored in the memory 275 beforehand.

In the manner described above, if the extension amount of the front suspension 5 is greater than or equal to the front extension/contraction amount threshold or if the contraction amount of the rear suspension 6 is greater than or equal to the rear extension/contraction amount threshold, when the driving force decreases by a changing of the gear stages in the multi-stage automatic transmission 12, a posture change in which the vehicle rotates forward about the rotation axis extending in the left-right direction easily occurs.

The posture change predictor 271 may predict the change of the travel line of the vehicle 1 described above, by using the contraction amount of the front suspension 5 or the extension amount of the rear suspension 6. That is, the posture change predictor 271 may predict the change of the travel line of the vehicle 1 by using any value as long as the posture change predictor 271 uses at least one of the extension/contraction amount of the front suspension 5 or the extension/contraction amount of the rear suspension 6.

Based on the prediction result of a change of the travel line of the vehicle 1 as described above, the posture change predictor 271 generates a posture change prediction signal and outputs the signal to the gear-shift control determiner 273. If the posture change prediction signal output from the posture change predictor 271 is a signal for predicting that the travel line of the vehicle 1 changes by a changing of the gear stages in the multi-stage automatic transmission 12 while the vehicle 1 turns in the lean state, the gear-shift control determiner 273 inhibits changing of the gear stages in the multi-stage automatic transmission 12.

On the other hand, if the posture change prediction signal output from the posture change predictor 271 is a signal for predicting that the travel line of the vehicle 1 does not change by a changing of the gear stages in the multi-stage automatic transmission 12 while the vehicle 1 turns in the lean state, the gear-shift control determiner 273 permits changing of the gear stages in the multi-stage automatic transmission 12.

The gear-shift control determiner 273 outputs the determination result described above as a gear-shift control determination signal. In a manner similar to that of the first embodiment, the gear-shift signal generator 74 generates a gear-shift signal based on the gear-shift control determination signal, and outputs the gear-shift signal to the multi-stage automatic transmission 12.

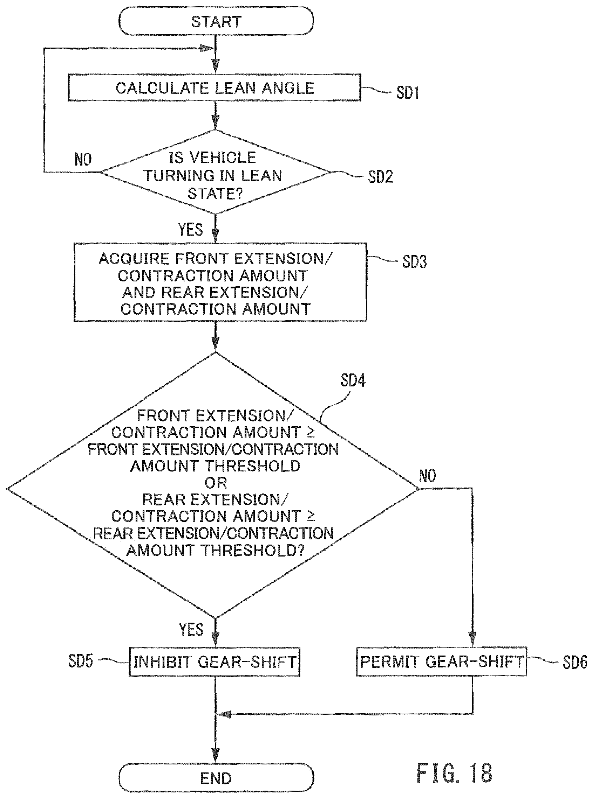

Next, gear-shift control by the controller 207 having the configuration described above will be described. FIG. 18 depicts an operation flow of gear-shift control by the controller 207.

When the flow in FIG. 18 starts, the lean angle calculator 72 of the controller 207 first obtains a lean angle based on a lean angular velocity of the vehicle acquired from the lean detector 61 (step SD1). Based on the obtained lean angle, the posture change predictor 271 determines whether the vehicle turns in the lean state or not (step SD2).

In step SD2, if it is determined that the vehicle turns in the lean state (YES), the controller 207 acquires a front extension/contraction amount of the front suspension 5 detected by the front extension/contraction amount detector 5a and a rear extension/contraction amount of the rear suspension 6 detected by the rear extension/contraction amount detector 6a (step SD3). On the other hand, in step SD2, if it is determined that the vehicle does not turn in the lean state (NO), the process returns to step SD1, and the controller 207 obtains a lean angle based on the lean angular velocity of the vehicle acquired from the lean detector 61.

Thereafter, in step SD4, the posture change predictor 271 of the controller 207 predicts a posture change and a travel line change of the vehicle by using the acquired front extension/contraction amount and rear extension/contraction amount.

Specifically, if the extension amount of the front suspension 5 detected by the front extension/contraction amount detector 5a is greater than or equal to the front extension/contraction amount threshold or if the contraction amount of the rear suspension 6 detected by the rear extension/contraction amount detector 6a is greater than or equal to the rear extension/contraction amount threshold, the posture change predictor 271 predicts that the travel line of the vehicle 1 changes by a changing of the gear stages in the multi-stage automatic transmission 12 while the vehicle 1 turns in the lean state.

On the other hand, if the extension amount of the front suspension 5 is less than the front extension/contraction amount threshold and the contraction amount of the rear suspension 6 is less than the rear extension/contraction amount threshold, the posture change predictor 271 predicts that the travel line of the vehicle 1 does not change by a changing of the gear stages in the multi-stage automatic transmission 12 while the vehicle 1 turns in the lean state.

In step SD4, if the extension amount of the front suspension 5 is greater than or equal to the front extension/contraction amount threshold or if the contraction amount of the rear suspension 6 is greater than or equal to the rear extension/contraction amount threshold (YES), based on the gear-shift control determination signal generated by the gear-shift control determiner 273, the gear-shift signal generator 74 generates a gear-shift signal for inhibiting changing the gear stages in the multi-stage automatic transmission 12 and outputs the signal to the multi-stage automatic transmission 12. In this manner, in the multi-stage automatic transmission 12, changing of the gear stages is inhibited (step SD5).

On the other hand, in step SD4, if the extension amount of the front suspension 5 is less than the front extension/contraction amount threshold and if the contraction amount of the rear suspension 6 is less than the rear extension/contraction amount threshold (NO), based on the gear-shift control determination signal generated by the gear-shift control determiner 273, the gear-shift signal generator 74 generates a gear-shift signal for permitting changing the gear stages in the multi-stage automatic transmission 12 and outputs the signal to the multi-stage automatic transmission 12. In this manner, in the multi-stage automatic transmission 12, changing of the gear stages is permitted (step SD6).

After the processes in steps SD5 and SD6, this flow is finished.

As described above, the controller 207 predicts whether or not the travel line of the vehicle that rotates about the rotation axis extending in the left-right direction by a changing of the gear stages in the multi-stage automatic transmission 12 changes while the vehicle turns in the lean state, based on the front extension/contraction amount of the front suspension 5 and the rear extension/contraction amount of the rear suspension 6, and if the change of the travel line of the vehicle is predicted, the controller 207 inhibits changing of the gear stages in the multi-stage automatic transmission 12.

Accordingly, while the vehicle turns in the lean state, a change of the travel line of the vehicle that is caused by rotating about the rotation axis extending in the left-right direction can be reduced.

### (Fourth Embodiment)

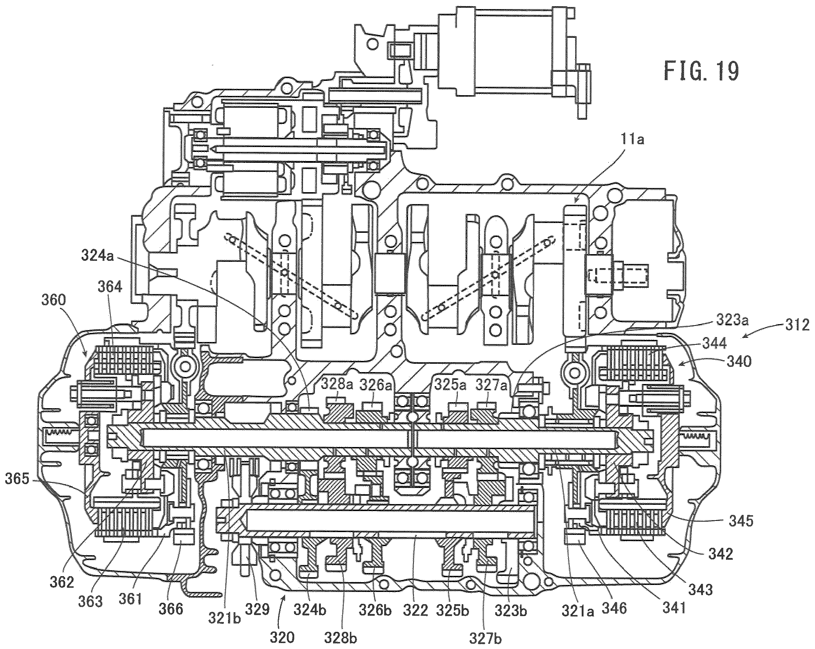

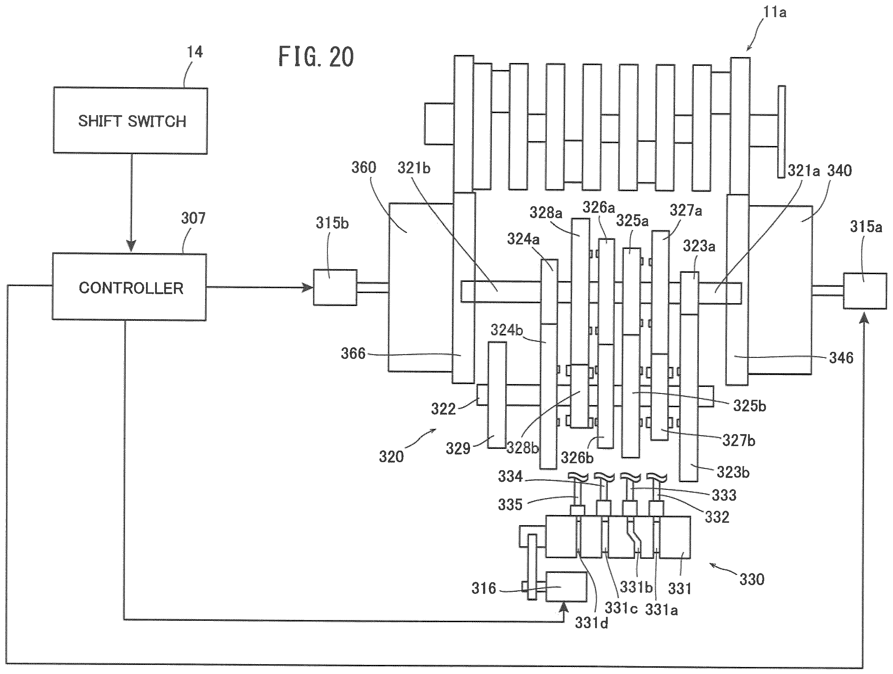

FIG. 19 illustrates a schematic configuration of a multi-stage automatic transmission 312 of a vehicle according to a fourth embodiment. For explanation, FIG. 20 schematically illustrates the configuration of the multi-stage automatic transmission 312. The multi-stage automatic transmission 312 of this embodiment is different from the configuration of the first embodiment in including two clutches of a first clutch 340 and a second clutch 360. In the following description, components similar to those of the first embodiment are denoted by the same reference characters and will not be described again, and only components different from those of the first embodiment will be described.

The multi-stage automatic transmission 312 includes a plurality of friction driving clutches, and achieves a smooth gear-shift by alternately performing power transfer in odd-number stages and in even-number stages out of the gear stages with the first clutch 340 and the second clutch 360. The multi-stage automatic transmission 312 includes a transmission mechanism 320, the first clutch 340, the second clutch 360, and a shift mechanism.

The transmission mechanism 320 is connected to a crankshaft 11a of an engine 11. The transmission mechanism 320 changes a torque transferred from the crankshaft 11a to a predetermined torque, and outputs the predetermined torque.

The first clutch 340 and the second clutch 360 are configured to transfer rotation of the crankshaft 11a to the transmission mechanism 320. That is, the first clutch 340 and the second clutch 360 are configured to switch between transfer and non-transfer of rotation of the crankshaft 11a to the transmission mechanism 320.

The first clutch 340 is driven by a first clutch actuator 315a described later. The first clutch 340 transfers a driving force at odd-number stages (i.e., first-speed stage, third-speed stage, and fifth-speed stage) of the transmission mechanism 320.

The second clutch 360 is driven by a second clutch actuator 315b described later. The second clutch 360 transfers a driving force at even-number stages (i.e., second-speed stage, fourth-speed stage, and six-speed stage) of the transmission mechanism 320.

The shift mechanism performs a gear-shift of the transmission mechanism 320 through a sequential shift mechanism 330 described later, and retains a gear stage selected by the transmission mechanism 320 until the next gear-shift is performed by the transmission mechanism 320. A configuration of the shift mechanism is similar to the configuration of the shift mechanism 50 of the first embodiment, and thus, will not be described in detail.

As described above, a driving force is transferred to the transmission mechanism 320 of the multi-stage automatic transmission 312 from the engine 11 through the first clutch 340 or the second clutch 360.

A configuration of the multi-stage automatic transmission 312 including the transmission mechanism 320, the first clutch 340, the second clutch 360, and the shift mechanism will now be described in detail.

Each of the first clutch 340 and the second clutch 360 is, for example, a multiplate friction clutch. The first clutch 340 includes a bottomed cylindrical clutch housing 341, a bottomed cylindrical clutch boss 342, a plurality of friction plates 343 and clutch plates 344 that are friction discs, a pressure plate 345, and an input gear 346. The second clutch 360 includes a bottomed cylindrical clutch housing 361, a bottomed cylindrical clutch boss 362, a plurality of friction plates 363 and clutch plates 364 that are friction discs, a pressure plate 365, and an input gear 366.

The first clutch 340 and the second clutch 360 have the same configuration. The configurations of the first clutch 340 and the second clutch 360 are similar to the configuration of the clutch 40 in the first embodiment. Thus, the configurations of the first clutch 340 and the second clutch 360 will not be described in detail.

The clutch boss 342 of the first clutch 340 is coupled to an end portion of a first main shaft 321a described later in the transmission mechanism 320. The clutch housing 341 of the first clutch 340 is connected to the input gear 346 that meshes with a gear provided on the crankshaft 11a. The plurality of friction plates 343 are attached to the inner peripheral surface of the clutch housing 341. The plurality of clutch plates 344 are attached to the outer peripheral surface of the clutch boss 342. The friction plates 343 and the clutch plates 344 are engaged or disengaged to thereby enable the first clutch 340 to switch between transfer and non-transfer of rotation of the crankshaft 11a to the first main shaft 321a of the transmission mechanism 320.

The clutch boss 362 of the second clutch 360 is coupled to an end portion of a second main shaft 321b described later in the transmission mechanism 320. The clutch housing 361 of the second clutch 360 is connected to the input gear 366 that meshes with a gear provided on the crankshaft 11a. The plurality of friction plates 363 are attached to the inner peripheral surface of the clutch housing 361. The plurality of clutch plates 364 are attached to the outer peripheral surface of the clutch boss 362. The friction plates 363 and the clutch plates 364 are engaged or disengaged to thereby enable the second clutch 360 to switch between transfer and non-transfer of rotation of the crankshaft 11a to the second main shaft 321b of the transmission mechanism 320.

Engagement and disengagement between the friction plates 343 and the clutch plates 344 in the first clutch 340 are performed by driving the first clutch actuator 315a as illustrated in FIG. 20. Engagement and disengagement between the friction plates 363 and the clutch plates 364 in the second clutch 360 are performed by driving the second clutch actuator 315b as illustrated in FIG. 20.

The transmission mechanism 320 is a multistep transmission mechanism. The transmission mechanism 320 includes the first main shaft 321a, the second main shaft 321b, the output shaft 322, a plurality of driving gears, a plurality of driven gears, and the sequential shift mechanism 330 (see FIG. 20).

The first main shaft 321a and the second main shaft 321b are disposed on the same axis such that one end of the first main shaft 321a faces one end of the second main shaft 321b. The first main shaft 321a and the second main shaft 321b are rotatable independently of each other. The other end of the first main shaft 321a is coupled to the clutch boss 342 of the first clutch 340. The other end of the second main shaft 321b is coupled to the clutch boss 362 of the second clutch 360.

The first main shaft 321a is provided with, as part of the plurality of driving gears, a first-speed fixing gear 323a, a first spline gear 325a, and a fifth-speed gear 327a constituting each of odd-number stages including a first-speed gear, a third-speed gear, and a fifth-speed gear. The first-speed fixing gear 323a, the first spline gear 325a, and the fifth-speed gear 327a are arranged on the first main shaft 321a in the order of the first-speed fixing gear 323a, the fifth-speed gear 327a, and the first spline gear 325a from an end portion to which the first clutch 340 is connected.

The first-speed fixing gear 323a is fixed to the first main shaft 321a, and rotates together with the first main shaft 321a. The first-speed fixing gear 323a meshes with a first-speed gear 323b described later disposed on the output shaft 322.

The fifth-speed gear 327a is rotatably attached on the first main shaft 321a with movement in the axial direction of the first main shaft 321a restricted. The fifth-speed gear 327a meshes with a third spline gear 327b described later of the output shaft 322.

The first spline gear 325a is attached on the first main shaft 321a to be rotatable together with the first main shaft 321a and movable along the axial direction of the first main shaft 321a. The first spline gear 325a meshes with a third-speed gear 325b of the output shaft 322.

The first spline gear 325a is connected to a shift fork 333 described later of the sequential shift mechanism 330, and moves in the axial direction on the first main shaft 321a by movement of the shift fork 333. The first spline gear 325a moves on the first main shaft 321a as described above to thereby be connected to the fifth-speed gear 327a. Accordingly, the fifth-speed gear 327a can rotate together with the first main shaft 321a.

The second main shaft 321b is provided with, as part of the plurality of driving gears, a second-speed fixing gear 324a, a second spline gear 326a, and a sixth-speed gear 328a constituting each of even-number stages including a second-speed gear, a fourth-speed gear, and a sixth-speed gear. The second-speed fixing gear 324a, the second spline gear 326a, and the sixth-speed gear 328a are arranged on the second main shaft 321b in the order of the second-speed fixing gear 324a, the sixth-speed gear 328a, and the second spline gear 326a from an end portion to which the second clutch 360 is connected.

The second-speed fixing gear 324a is fixed to the second main shaft 321b, and rotates together with the second main shaft 321b. The second-speed fixing gear 324a meshes with a second-speed gear 324b described later disposed on the output shaft 322.

The sixth-speed gear 328a is rotatably attached on the second main shaft 321b with movement in the axial direction of the second main shaft 321b restricted. The sixth-speed gear 328a meshes with a fourth spline gear 328b described later of the output shaft 322.

The second spline gear 326a is attached on the second main shaft 321b to be rotatable together with the second main shaft 321b and movable along the axial direction of the second main shaft 321b. The second spline gear 326a meshes with a fourth-speed gear 326b of the output shaft 322.

The second spline gear 326a is connected to a shift fork 334 described later of the sequential shift mechanism 330, and moves in the axial direction on the second main shaft 321b by movement of the shift fork 334. The second spline gear 326a moves on the second main shaft 321b as described above to thereby be connected to the sixth-speed gear 328a. Accordingly, the sixth-speed gear 328a can rotate together with the second main shaft 321b.

The output shaft 322 is provided with the first-speed gear 323b, the third spline gear 327b, the third-speed gear 325b, the fourth-speed gear 326b, the fourth spline gear 328b, the second-speed gear 324b, and a sprocket 329 in this order from a side close to the first clutch 340. The first-speed gear 323b, the third-speed gear 325b, the fourth-speed gear 326b, and the second-speed gear 324b are provided on the output shaft 322 to be rotatable with respect to the output shaft 322 with movement along the axial direction of the output shaft 322 restricted.

The third spline gear 327b and the fourth spline gear 328b are attached on the output shaft 322 to rotate together with the output shaft 322 and to be movable along the axial direction of the output shaft 322. The third spline gear 327b meshes with the fifth-speed gear 327a of the first main shaft 321a. The fourth spline gear 328b meshes with the sixth-speed gear 328a of the second main shaft 321b.

The third spline gear 327b is connected to a shift fork 332 described later of the sequential shift mechanism 330, and is caused to move on the output shaft 322 along the axial direction by movement of the shift fork 332. With this movement on the output shaft 322, the third spline gear 327b is connected to the first-speed gear 323b or the third-speed gear 325b. Accordingly, the first-speed gear 323b or the third-speed gear 325b is allowed to rotate together with the output shaft 322.

The fourth spline gear 328b is connected to a shift fork 335 described later of the sequential shift mechanism 330, and is caused to move on the output shaft 322 along the axial direction by movement of the shift fork 335. With this movement on the output shaft 322, the fourth spline gear 328b is connected to the second-speed gear 324b or the fourth-speed gear 326b. Accordingly, the second-speed gear 324b or the fourth-speed gear 326b is allowed to rotate together with the output shaft 322.

The sprocket 329 rotates together with the output shaft 322. A chain, not shown, is attached to the sprocket 329. That is, rotation of the output shaft 322 is output through the sprocket 329 and the chain.

The first spline gear 325a, the second spline gear 326a, the third spline gear 327b, and the fourth spline gear 328b function as transmission gears, and also function as dog selectors. The first spline gear 325a, the second spline gear 326a, the third spline gear 327b, and the fourth spline gear 328b move along the axial direction on the first main shaft 321a, the second main shaft 321b, or the output shaft 322 to thereby be connected to the transmission gears adjacent to these gears in the axial direction by a dog mechanism, not shown. The dog mechanism is similar to a configuration of a known dog mechanism (e.g., Japanese Patent Application Publication No. 2010-133555), and thus, will not be described in detail.

For example, in a case where the gear stage of the transmission mechanism 320 is a first speed, the first spline gear 325a on the first main shaft 321a meshes with the third-speed gear 325b on the output shaft 322. The third spline gear 327b on the output shaft 322 is connected to the first-speed gear 323b. Accordingly, the first-speed gear 323b is fixed to the output shaft 322 through the third spline gear 327b to be rotatable together with the output shaft 322. Thus, rotation is transferred from the first main shaft 321a to the output shaft 322 through the first-speed gear 323b meshing with the first-speed fixing gear 323a fixed to the first main shaft 321a. At this time, the third-speed gear 325b meshing with the first spline gear 325a on the first main shaft 321a rotates with respect to the output shaft 322.

In a case where the gear stage of the transmission mechanism 320 is a second speed, the second spline gear 326a on the second main shaft 321b meshes with the fourth-speed gear 326b on the output shaft 322. The fourth spline gear 328b on the output shaft 322 is connected to the second-speed gear 324b. Accordingly, the second-speed gear 324b is fixed to the output shaft 322 through the fourth spline gear 328b to be rotatable together with the output shaft 322. Thus, rotation is transferred from the second main shaft 321b to the output shaft 322 through the second-speed gear 324b meshing with the second-speed fixing gear 324a fixed to the second main shaft 321b. At this time, the fourth-speed gear 326b meshing with the second spline gear 326a on the second main shaft 321b rotates with respect to the output shaft 322.

In a case where the gear stage of the transmission mechanism 320 is a third speed, the first spline gear 325a on the first main shaft 321a meshes with the third-speed gear 325b on the output shaft 322. The third spline gear 327b on the output shaft 322 is connected to the third-speed gear 325b. Accordingly, the third-speed gear 325b is fixed to the output shaft 322 through the third spline gear 327b to be rotatable together with the output shaft 322. Thus, rotation is transferred from the first main shaft 321a to the output shaft 322 through the third-speed gear 325b meshing with the first spline gear 325a that rotates together with the first main shaft 321a.

In a case where the gear stage of the transmission mechanism 320 is a fourth speed, the second spline gear 326a on the second main shaft 321b meshes with the fourth-speed gear 326b on the output shaft 322. The fourth spline gear 328b on the output shaft 322 is connected to the fourth-speed gear 326b. Accordingly, the fourth-speed gear 326b is fixed to the output shaft 322 through the fourth spline gear 328b to be rotatable together with the output shaft 322. Thus, rotation is transferred from the second main shaft 321b to the output shaft 322 through the fourth-speed gear 326b meshing with the second spline gear 326a that rotates together with the second main shaft 321b.

In a case where the gear stage of the transmission mechanism 320 is a fifth speed, the first spline gear 325a on the first main shaft 321a is connected to the fifth-speed gear 327a. Accordingly, the fifth-speed gear 327a is fixed to the first main shaft 321a through the first spline gear 325a to be rotatable together with the first main shaft 321a. The third spline gear 327b on the output shaft 322 meshes with the fifth-speed gear 327a on the first main shaft 321a at a position at which the third spline gear 327b is connected to none of the first-speed gear 323b and the third-speed gear 325b. Thus, rotation is transferred from the first main shaft 321a to the output shaft 322 through the fifth-speed gear 327a connected to the first spline gear 325a that rotates together with the first main shaft 321a and through the third spline gear 327b on the output shaft 322.

In a case where the gear stage of the transmission mechanism 320 is a sixth speed, the second spline gear 326a on the second main shaft 321b is connected to the sixth-speed gear 328a. Accordingly, the sixth-speed gear 328a is fixed to the second main shaft 321b through the second spline gear 326a to be rotatable together with the second main shaft 321b. The fourth spline gear 328b on the output shaft 322 meshes with the sixth-speed gear 328a on the second main shaft 321b at a position at which the fourth spline gear 328b is connected to none of the second-speed gear 324b and the fourth-speed gear 326b. Thus, rotation is transferred from the second main shaft 321b to the output shaft 322 through the sixth-speed gear 328a connected to the second spline gear 326a that rotates together with the second main shaft 321b and through the fourth spline gear 328b on the output shaft 322.

The sequential shift mechanism 330 includes a shift cam 331 and the shift forks 332 through 335. As illustrated in FIG. 20, cam grooves 331a through 331d are formed on the outer peripheral surface of the shift cam 331 of the sequential shift mechanism 330. The cam grooves 331a through 331d are arranged along the axial direction of the shift cam 331 and each extend circumferentially on the outer peripheral surface of the shift cam 331. Configurations of the cam grooves 331a through 331d of this embodiment are similar to those of known cam grooves (e.g., Japanese Patent Application Publication No. 2010-133555), and thus, will not be described in detail. Each of the cam grooves 331a through 331d is disposed on the outer peripheral surface of the shift cam 331 such that the position in the axial direction of the shift cam 331 changes in accordance with the position in the circumferential direction of the shift cam 331. One end of each of the shift forks 332 through 335 is located on an associated one of the cam grooves 331a through 331d.

The other end of the shift fork 332 is connected to the third spline gear 327b. The other end of the shift fork 333 is connected to the first spline gear 325a. The other end of the shift fork 334 is connected to the second spline gear 326a. The other end of the shift fork 335 is connected to the fourth spline gear 328b. Accordingly, when the shift forks 332 through 335 move in the axial direction along the cam grooves 331a through 331d of the shift cam 331, the first spline gear 325a, the second spline gear 326a, the third spline gear 327b, and the fourth spline gear 328b also move in the axial direction. A driving force in a rotation direction is applied to the shift cam 331 by a shift actuator 316.

As described above, with the movement of the first spline gear 325a, the second spline gear 326a, the third spline gear 327b, and the fourth spline gear 328b in accordance with the movement of the shift forks 332 through 335, changing to each gear stage is performed in the transmission mechanism 320 as described above.

In the multi-stage automatic transmission 312 having the configuration described above, in changing the gear stages in response to an operation of a shift switch 14 by a driver, the shift actuator 316, the first clutch actuator 315a, and the second clutch actuator 315b are controlled and driven by the controller 307. That is, the controller 307 outputs control signals to the shift actuator 316, the first clutch actuator 315a, and the second clutch actuator 315b.

The controller 307 disengages one of the first clutch 340 or the second clutch 360, and then, changes the gear stage on one of the first main shaft 321a or the second main shaft 321b connected to the disengaged clutch. Thereafter, the controller 307 causes the disengaged one of the first clutch 340 or the second clutch 360 to transition from the disengaged state to an engaged state through a semi-clutch state, while causing the engaged one of the first clutch 340 or the second clutch 360 to transition from the engaged state to the disengaged state through the semi-clutch state.

As one example of a gear-shift of the multi-stage automatic transmission 312, the case of shifting up the gear stage from a second speed to a third speed will be described. In this embodiment, the vehicle includes the shift switch 14 for allowing a driver to instruct changing of the gear stages to the multi-stage automatic transmission 312.

When the driver of the vehicle operates the shift switch 14 to perform a shift-up from the second speed to the third speed, the controller 307 controls driving of the first clutch actuator 315a so as to disengage the first clutch 340. Accordingly, torque transfer from the crankshaft 11a to the first main shaft 321a by way of the first clutch 340 is blocked. In this case, a torque of the crankshaft 11a is transferred to the output shaft 322 through the second clutch 360, the second main shaft 321b, the second-speed fixing gear 324a, the second-speed gear 324b, and the fourth spline gear 328b.

Next, the controller 307 controls driving of the shift actuator 316 to thereby cause the shift cam 331 to rotate by a predetermined angle. Accordingly, the shift fork 332 moves in the axial direction and connects the third spline gear 327b on the output shaft 322 to the third-speed gear 325b. Thus, the first main shaft 321a and the output shaft 322 are connected to each other to enable torque transfer through the first spline gear 325a, the third-speed gear 325b, and the third spline gear 327b. It should be noted that since the first clutch 340 is disengaged as described above, a torque of the crankshaft 11a is not transferred from the first main shaft 321a to the output shaft 322.

The controller 307 controls driving of the first clutch actuator 315a and the second clutch actuator 315b to thereby cause the first clutch 340 to transition from the disengaged state to the engaged state through the semi-clutch state, while causing the second clutch 360 to transition from the engaged state to the disengaged state through the semi-clutch state.

In this case, a torque transferred from the crankshaft 11a to the output shaft 322 through the first clutch 340, the first main shaft 321a, the first spline gear 325a, the third-speed gear 325b, and the third spline gear 327b gradually increases. On the other hand, a torque transferred from the crankshaft 11a to the output shaft 322 through the second clutch 360, the second main shaft 321b, the second-speed fixing gear 324a, the second-speed gear 324b, and the fourth spline gear 328b gradually decreases, and becomes zero when the second clutch 360 becomes disengaged.

As described above, in the multi-stage automatic transmission 312 of this embodiment, by changing the gear stages by using two clutches of the first clutch 340 and the second clutch 360, it is possible to prevent a torque from abruptly changing in changing the gear stages.

In the multi-stage automatic transmission 312 of this embodiment, at least one of the first clutch 340 or the second clutch 360 is always in the engaged state, and thus, a decrease in a driving force by clutch disengagement as described in the multi-stage automatic transmission 12 of the first embodiment does not occur. However, in the multi-stage automatic transmission 312, the driving force increases by shifting down the gear stage, and thus, the vehicle is subjected to a posture change in which the vehicle rotates rearward about the rotation axis extending in the left-right direction. On the other hand, in the multi-stage automatic transmission 312, the driving force decreases by shifting up the gear stage, and thus, the vehicle is subjected to a posture change in which the vehicle rotates forward about the rotation axis extending in the left-right direction.

The shift-down is a gear-shift of changing the gear stages such that the gear-shift ratio increases. The shift-up is a gear-shift of changing the gear stages such that the gear-shift ratio decreases.

The controller 307 of the multi-stage automatic transmission 312 having the configuration of this embodiment has a configuration similar to that of the controller 7 of the first embodiment. That is, the controller 307 includes a driving force calculator 71, a lean angle calculator 72, a gear-shift control determiner 73, and a gear-shift signal generator 74. Configurations of these components are similar to those in the first embodiment, and thus, will not be described in detail.

In a manner similar to that of the controller 7 of the first embodiment, the controller 307 of this embodiment also predicts a change of the travel line of the vehicle in which the vehicle rotates about the rotation axis extending in the left-right direction by changing the gear stages in the multi-stage automatic transmission 312 based on a driving force and a lean angle of the vehicle, and if a change of the travel line of the vehicle is predicted, the controller 307 inhibits changing of the gear stages in the multi-stage automatic transmission 312.

Accordingly, while the vehicle turns in the lean state, a change of the travel line of the vehicle that is caused by rotating about the rotation axis extending in the left-right direction can be reduced.

In this embodiment, the configuration of the multi-stage automatic transmission 312 is applied to the configuration of the multi-stage automatic transmission of the first embodiment, but the present teaching is not limited to this example. The configuration of the multi-stage automatic transmission 312 of this embodiment may be applied to configurations of multi-stage automatic transmissions of other embodiments such as the variation of the first embodiment and the second and third embodiments.

### (Other Embodiments)

The embodiments of the present teaching have been described above, but the above embodiments are merely examples for carrying out the teaching. Thus, the present teaching is not limited to the embodiments, and the embodiments may be modified as necessary within a range not departing from the scope defined by the appended claims.

In the first embodiment, the controller 7 predicts whether or not the travel line of the vehicle 1 changes by changing the gear stages in the multi-stage automatic transmission 12 while the vehicle 1 turns in the lean state by using a driving force and a lean angle of the vehicle 1. In the third embodiment, the controller 207 predicts whether or not the travel line of the vehicle 1 changes by changing the gear stages in the multi-stage automatic transmission 12 while the vehicle turns in the lean state by using the extension/contraction amount of at least one of the front suspension 5 or the rear suspension 6.

Alternatively, the controller may predict whether or not the travel line of the vehicle 1 changes by changing the gear stages in the multi-stage automatic transmission while the vehicle turns in the lean state by using a rotation angle (so-called pitch angle) in the forward direction or the rearward direction about the rotation axis extending in the left-right direction of the vehicle. In this case, if the rotation angle is greater than or equal to the rotation angle threshold, the controller may predict that the travel line of the vehicle changes by changing the gear stages in the multi-stage automatic transmission.

The controller may predict whether or not the travel line of the vehicle 1 changes by changing the gear stages in the multi-stage automatic transmission based on at least one of the lean angle, the extension/contraction amount of at least one of the front suspension or the rear suspension, the rotation angle in the forward direction or in the rearward direction about the rotation axis extending in the left-right direction of the vehicle, or the driving force. In this case, the controller may predict that the travel line of the vehicle changes by changing the gear stages in the multi-stage automatic transmission if the vehicle satisfies at least one of a condition that the lean angle is greater than or equal to the lean angle threshold, a condition that the extension/contraction amount of the front suspension is greater than or equal to the front extension/contraction amount threshold, a condition that the extension/contraction amount of the rear suspension is greater than or equal to the rear extension/contraction amount threshold, a condition that the rotation angle is greater than or equal to the rotation angle threshold, or a condition that the driving force is greater than or equal to the driving force threshold.

If a change of the travel line is predicted while the vehicle turns in the lean state, the controller may perform at least one of suppression of a change of a driving force, inhibition of changing of the gear stages in the multi-stage automatic transmission, or suppression of extension and contraction of at least one of the front suspension or the rear suspension.

That is, if a change of the travel line of the vehicle by changing the gear stages in the multi-stage automatic transmission is predicted while the vehicle turns in the lean state, based on at least one of the lean angle, the extension/contraction amount of the front suspension, the extension/contraction amount of the rear suspension, the pitch angle, or the driving force, the controller may perform at least one of suppression of a change of the driving force, inhibition of changing the gear stages in the multi-stage automatic transmission, and suppression of extension and contraction of at least one of the front suspension or the rear suspension.

In the first embodiment, as shown in FIG. 8, the gear-shift control determination data is data in which the threshold of a driving force for inhibiting changing of the gear stages decreases as the lean angle increases. The gear-shift control determination data, however, may be any data as long as the threshold of a driving force for inhibiting changing of the gear stage varies with respect to the lean angle. The gear-shift control determination data may be data in which the threshold of a driving force for inhibiting changing of the gear stage is constant with respect to the lean angle.

In the variation of the first embodiment, as shown in FIG. 10, the gear-shift control determination data is data in which the threshold of a driving force for permitting only changing of the gear stages capable of suppressing a change of the driving force decreases as the lean angle increases. The gear-shift control determination data, however, may be any data as long as the threshold of the driving force for permitting only changing of the gear stages capable of suppressing a change of the driving force varies with respect to the lean angle. The gear-shift control determination data may be data in which the threshold of a driving force for permitting only changing of the gear stages capable of suppressing a change of the driving force is constant with respect to the lean angle.

In the second embodiment, as shown in FIG. 15, the extension/contraction suppression determination data is data in which the threshold of a driving force for suppressing extension and contraction of at least one of the front suspension 5 or the rear suspension 6 decreases as the lean angle increases. The extension/contraction suppression determination data, however, may be any data as long as the threshold of the driving force for suppressing extension and contraction of at least one of the front suspension or the rear suspension varies with respect to the lean angle. The extension/contraction suppression determination data may be data in which the threshold of a driving force for suppressing extension and contraction of at least one of the front suspension or the rear suspension is constant with respect to the lean angle.

In the first and second embodiments, the driving force calculator 71 obtains a driving force from an engine speed and a throttle opening degree by using the driving force data shown in FIG. 7. Alternatively, the driving force calculator may calculate a driving force by using other data.

In the embodiments described above, a driving force is transferred from the engine unit 10 to the rear wheel 4 of the vehicle 1. Alternatively, a driving force may be transferred from the engine unit to the front wheel of the vehicle. In this case, the multi-stage automatic transmission changes a driving force to be transferred from the engine to the front wheel.

In the embodiments described above, the vehicle 1 includes the engine 11 as a driving source. Alternatively, the driving source of the vehicle may be a motor. In this case, the controller obtains a driving force by using a motor speed instead of the engine speed, and a current amount supplied to the motor instead of the throttle opening degree. The driving source may be a hybrid system using a combination of an engine and a motor.

In the first and fourth embodiments, examples of the multi-stage automatic transmission are described. Alternatively, the multi-stage automatic transmission may be a transmission with any configuration as long as the transmission has a configuration including at least one clutch and a plurality of gear stages and capable of automatically changing the gear stages stepwise.

In the embodiments described above, the multi-stage automatic transmissions 12 and 312 are six-speed transmissions. Alternatively, the multi-stage automatic transmission may be a transmission for five speeds or less, or a transmission for seven or more speeds.

In the embodiments described above, the motorcycles have been described as examples of the vehicle. The vehicle, however, may be a vehicle other than a motorcycle as long as the vehicle is a leaning vehicle including a multi-stage automatic transmission.

In the embodiments described above, if a change of the travel line is predicted while the vehicle turns in the lean state, the controller performs control such as suppression of a change of a driving force, inhibition of changing of the gear stages in the multi-stage automatic transmission, or suppression of extension and contraction of at least one of the front suspension or the rear suspension. Alternatively, if a change of the travel line is not predicted while the vehicle turns in the lean state or if the vehicle does not turn in the lean state, the controller may perform other speed control or extension/contraction control, for example.

### REFERENCE SIGNS LIST

1 vehicle (leaning vehicle)
2 vehicle body
3 front wheel
4 rear wheel
5 front suspension
6 rear suspension
7, 107, 207, 307 controller
10 engine unit
11 engine
11a crankshaft
12, 312 multi-stage automatic transmission
14 shift switch
15 clutch actuator
16 shift actuator
20, 320 transmission mechanism
21 main shaft
22 output shaft
23 driving gear
24 driven gear
40 clutch
46 input gear
50 shift mechanism
61 lean detector
62 engine speed detector
63 throttle opening degree detector
71 driving force calculator
72 lean angle calculator
73, 273 gear-shift control determiner
74 gear-shift signal generator
75, 275 memory
81, 83 spring
82, 84 damper
97 regulating valve
173 extension/contraction suppression determiner
174 extension/contraction signal generator
271 posture change predictor
315a first clutch actuator
315b second clutch actuator
321a first main shaft
321b second main shaft
322 output shaft
323a first-speed fixing gear
323b first-speed gear
324a second-speed fixing gear
324b second-speed gear
325a first spline gear
325b third-speed gear
326a second spline gear
326b fourth-speed gear
327a fifth-speed gear
327b third spline gear
328a sixth-speed gear
328b fourth spline gear
329 sprocket
340 first clutch
350 shift mechanism
360 second clutch
P rotation axis

## Claims

1. A leaning vehicle (1) that is configured to lean leftward when turning to the left and to lean rightward when turning to the right, the leaning vehicle (1) comprising:
a vehicle body (2);
a plurality of wheels (3, 4) including a front wheel (3) and a rear wheel (4);
a front suspension (5) configured to support the front wheel (3) to the vehicle body (2) such that the front wheel (3) is allowed to be displaced, the front suspension (5) being extendable and contractable;
a rear suspension (6) configured to support the rear wheel (4) to the vehicle body (2) such that the rear wheel (4) is allowed to be displaced, the rear suspension (6) being extendable and contractable;
a driving source (11) configured to supply a driving force to at least one of the front wheel (3) or the rear wheel (4);
a gear-type multi-stage automatic transmission (12, 312) including a plurality of gear stages and a clutch (40, 340, 360), and configured to change the driving force to be transferred from the driving source (11) to the at least one of the front wheel (3) or the rear wheel (4) by automatically changing the gear stages stepwise; and
a gear-shift controller (7, 107, 207, 307) configured to control changing of the gear stages in the multi-stage automatic transmission (12, 312), **characterized in that**
based on a vehicle state in which, while the leaning vehicle (1) that rotates about a rotation axis extending in a left-right direction by changing the gear stages in the multi-stage automatic transmission (12, 312) turns in a lean state, a change of a travel line of the leaning vehicle (1) is predicted,
the gear-shift controller (7, 107, 207, 307) is configured to perform at least one of suppression of a change of the driving force by changing the gear stages, or suppression of extension and contraction of the front suspension (5) and the rear suspension (6).

2. The leaning vehicle (1) according to claim 1, wherein
the gear-shift controller (7, 107, 207, 307) is configured to predict a change of the travel line of the leaning vehicle (1) while the leaning vehicle (1) that rotates about the rotation axis by changing the gear stages in the multi-stage automatic transmission (12, 312) turns in the lean state, based on at least one of an extension/contraction amount of at least one of the front suspension (5) or the rear suspension (6), a rotation angle in a forward direction or in a rearward direction about the rotation axis of the leaning vehicle (1), or the driving force.

3. The leaning vehicle (1) according to claim 2, wherein
the gear-shift controller (7, 107, 207, 307) is configured to predict that the leaning vehicle (1) rotates about the rotation axis by changing the gear stages in the multi-stage automatic transmission (12, 312) and the travel line of the leaning vehicle (1) changes if at least one of a condition that the extension/contraction amount of the front suspension (5) is greater than or equal to a front extension/contraction amount threshold, a condition that the extension/contraction amount of the rear suspension (6) is greater than or equal to a rear extension/contraction amount threshold, a condition that the rotation angle is greater than or equal to a rotation angle threshold, or a condition that the driving force is greater than or equal to a driving force threshold, is satisfied.

4. The leaning vehicle (1) according to any one of claims 1 to 3, wherein
the driving source (11) is configured to supply the driving force to the rear wheel (4), and
based on at least one of an extension amount of the front suspension (5) or a contraction amount of the rear suspension (6), the gear-shift controller (7, 107, 207, 307) is configured to predict a change of the travel line of the leaning vehicle (1) that rotates about the rotation axis by changing the gear stages in the multi-stage automatic transmission (12, 312) while the leaning vehicle (1) turns in the lean state.

5. The leaning vehicle (1) according to any one of claims 1 to 4, wherein
if a change of the travel line of the leaning vehicle (1) that rotates about the rotation axis by changing the gear stages in the multi-stage automatic transmission (12, 312) is predicted while the leaning vehicle (1) turns in the lean state, the gear-shift controller (7, 107, 207, 307) is configured to reduce a disengaging speed of the clutch in changing the gear stages in the multi-stage automatic transmission (12, 312) as compared to a disengaging speed of the clutch in a case where a change of the travel line of the leaning vehicle (1) is not predicted.

6. The leaning vehicle (1) according to any one of claims 1 to 4, wherein
if a change of the travel line of the leaning vehicle (1) that rotates about the rotation axis by changing the gear stages in the multi-stage automatic transmission (12, 312) is predicted while the leaning vehicle (1) turns in the lean state, the gear-shift controller (7, 107, 207, 307) is configured to reduce the driving force and then to disengage the clutch of the multi-stage automatic transmission (12, 312) in changing the gear stages in the multi-stage automatic transmission (12, 312).

7. The leaning vehicle (1) according to any one of claims 1 to 4, wherein
if a change of the travel line of the leaning vehicle (1) that rotates about the rotation axis by changing the gear stages in the multi-stage automatic transmission (12, 312) is predicted while the leaning vehicle (1) turns in the lean state, the gear-shift controller (7, 107, 207, 307) is configured to suppress the extension/contraction amount of at least one of the front suspension (5) or the rear suspension (6) as compared to a case where a change of the travel line of the leaning vehicle (1) is not predicted.

8. The leaning vehicle (1) according to any one of claims 1 to 7, wherein
while the leaning vehicle (1) turns in the lean state, the gear-shift controller (7, 107, 207, 307) is configured to change at least one of a range of a change of the travel line where changing of the gear stages is inhibited, a range of a change of the travel line where a change of the driving force by changing the gear stages is suppressed, or a range of a change of the travel line where extension and contraction of at least one of the front suspension (5) or the rear suspension (6) are suppressed, in accordance with a lean angle of the leaning vehicle (1).

## Patentansprüche

1. Ein Neigungsfahrzeug (1), das dazu konfiguriert ist, sich nach links zu neigen, wenn es nach links fährt, und sich nach rechts zu neigen, wenn es nach rechts fährt, wobei das Neigungsfahrzeug (1) folgende Merkmale aufweist:
einen Fahrzeugkörper (2);
eine Mehrzahl von Rädern (3, 4), die ein Vorderrad (3) und ein Hinterrad (4) umfassen;
eine vordere Aufhängung (5), die dazu konfiguriert ist, das Vorderrad (3) an dem Fahrzeugkörper (2) derart zu halten, dass es möglich ist, dass das Vorderrad (3) versetzt wird, wobei die vordere Aufhängung (5) erweiterbar und zusammenziehbar ist;
eine hintere Aufhängung (6), die dazu konfiguriert ist, das hintere Rad (4) an dem Fahrzeugkörper (2) derart zu halten, dass es möglich ist, dass das Hinterrad (4) verschoben/versetzt wird, wobei die hintere Aufhängung ausziehbar und einziehbar ist;
eine Antriebsquelle (11), die dazu konfiguriert ist, dem Vorderrad (3) und/oder dem Hinterrad (4) eine Antriebskraft zuzuführen;
ein Gangtyp-Mehrstufen-Automatikgetriebe (12, 312), das eine Mehrzahl von Gangstufen und eine Kupplung (40, 340, 360) umfasst und dazu konfiguriert ist, die von der Antriebsquelle (11) zu dem Vorderrad (3) und/oder Hinterrad (4) zu übertragende Antriebskraft durch automatisches schrittweises Ändern der Gangstufen zu ändern; und
eine Gangwechselsteuerung (7, 107, 207, 307), die dazu konfiguriert ist, das Ändern der Gangstufen in dem Mehrstufen-Automatikgetriebe (12, 312) zu steuern, **dadurch gekennzeichnet, dass**
auf der Basis eines Fahrzeugzustands, in dem, während das Neigungsfahrzeug (1), das sich um eine in einer Links-Rechts-Richtung erstreckende Drehachse dreht, durch Ändern der Gangstufen in dem Mehrstufen-Automatikgetriebe (12, 312), in einem Neigungszustand eine Kurve fährt, eine Änderung einer Fahrlinie des Neigungsfahrzeugs (1) vorhergesagt wird,
die Gangwechselsteuerung (7, 107, 207, 307) dazu konfiguriert ist, eine Unterdrückung einer Änderung der Antriebskraft durch Ändern der Gangstufen und/oder einer Unterdrückung eines Ausziehens und Einziehens der vorderen Aufhängung (5) und der hinteren Aufhängung (6) auszuführen.

2. Das Neigungsfahrzeug (1) gemäß Anspruch 1, wobei
die Gangwechselsteuerung (7, 107, 207, 307) dazu konfiguriert ist, eine Änderung der Fahrlinie des Neigungsfahrzeugs (1), während das Neigungsfahrzeug (1), das sich um die Drehachse dreht, durch Ändern der Gangstufe in dem Mehrstufen-Automatikgetriebe (12, 312), in dem Neigungszustand eine Kurve fährt, auf der Basis zumindest einer Auszieh-/Einzieh-Größe der vorderen Aufhängung (5) und/oder der hinteren Aufhängung (6), eines Drehwinkels in einer Vorwärtsrichtung oder in einer Rückwärtsrichtung um die Drehachse des Neigungsfahrzeugs (1) oder der Antriebskraft vorherzusagen.

3. Das Neigungsfahrzeug (1) gemäß Anspruch 2, wobei
die Gangwechselsteuerung (7, 107, 207, 307) dazu konfiguriert ist, vorherzusagen, dass sich das Neigungsfahrzeug (1) um die Drehachse dreht, durch Ändern der Rangstufen in dem Mehrstufen-Automatikgetriebe (12, 312), und dass sich die Fahrlinie des Neigungsfahrzeugs (1) ändert, falls eine Bedingung, dass die Auszieh-/Einzieh-Größe der vorderen Aufhängung (5) größer als oder gleich groß wie eine vordere Auszieh-/Einzieh-Größenschwelle ist, eine Bedingung, dass die Auszieh-/Einzieh-Größe der hinteren Aufhängung (6) größer als oder gleich groß wie eine hintere Auszieh-/Einzieh-Größenschwelle ist, eine Bedingung, dass der Drehwinkel größer als oder gleich groß wie eine Drehwinkelschwelle ist, und/oder eine Bedingung, dass die Antriebskraft größer als oder gleich groß wie eine Antriebskraftschwelle ist, erfüllt ist.

4. Das Neigungsfahrzeug (1) gemäß einem der Ansprüche 1 bis 3, wobei
die Antriebsquelle (11) dazu konfiguriert ist, dem Hinterrad (4) die Antriebskraft zuzuführen, und
auf der Basis zumindest einer Auszieh-Größe der vorderen Aufhängung (5) und/oder einer Einzieh-Größe der hinteren Aufhängung (6), die Gangwechselsteuerung (7, 107, 207, 307) dazu konfiguriert ist, eine Änderung der Fahrlinie des Neigungsfahrzeugs (1), das sich um die Drehachse dreht, durch Ändern der Gangstufen in dem Mehrstufen-Automatikgetriebe (12, 312), während das Neigungsfahrzeug (1) in dem Neigungszustand eine Kurve fährt, vorherzusagen.

5. Das Neigungsfahrzeug (1) gemäß einem der Ansprüche 1 bis 4, wobei
falls eine Änderung der Fahrlinie des Neigungsfahrzeugs (1), das sich um die Drehachse dreht, durch Ändern der Gangstufen in dem Mehrstufen-Automatikgetriebe (12, 312), vorausgesagt wird, während das Neigungsfahrzeug (1) in dem Neigungszustand eine Kurve fährt, die Gangwechselsteuerung (7, 107, 207, 307) dazu konfiguriert ist, eine Außereingriffnahme-Geschwindigkeit der Kupplung beim Ändern der Gangstufen in dem Mehrstufen-Automatikgetriebe (12, 312) im Vergleich zu einer Außereingriffnahme-Geschwindigkeit der Kupplung in einem Fall, in dem eine Änderung der Fahrlinie des Neigungsfahrzeugs (1) nicht vorhergesagt wird, zu reduzieren.

6. Das Neigungsfahrzeug (1) gemäß einem der Ansprüche 1 bis 4, wobei
falls eine Änderung der Fahrlinie des Neigungsfahrzeugs (1), das sich um die Drehachse dreht, durch Ändern der Gangstufen in dem Mehrstufen-Automatikgetriebe (12, 312), vorausgesagt wird, während das Neigungsfahrzeug (1) in dem Neigungszustand eine Kurve fährt, die Gangwechselsteuerung (7, 107, 207, 307) dazu konfiguriert ist, beim Ändern der Gangstufen in dem Mehrstufen-Automatikgetriebe (12, 312) die Antriebskraft zu reduzieren und dann die Kupplung des Mehrstufen-Automatikgetriebes (12, 312) außer Eingriff zu nehmen.

7. Das Neigungsfahrzeug (1) gemäß einem der Ansprüche 1 bis 4, wobei
falls eine Änderung der Fahrlinie des Neigungsfahrzeugs (1), das sich um die Drehachse dreht, durch Ändern der Gangstufen in dem Mehrstufen-Automatikgetriebe (12, 312), vorausgesagt wird, während das Neigungsfahrzeug (1) in dem Neigungszustand eine Kurve fährt, die Gangwechselsteuerung (7, 107, 207, 307) dazu konfiguriert ist, die Auszieh-/Einzieh-Größe der vorderen Aufhängung (5) und/oder der hinteren Aufhängung (6) im Vergleich zu einem Fall, in dem eine Änderung der Fahrlinie des Neigungsfahrzeugs (1) nicht vorausgesagt wird, zu unterdrücken.

8. Das Neigungsfahrzeug (1) gemäß einem der Ansprüche 1 bis 7, wobei
während das Neigungsfahrzeug (1) im Neigungszustand eine Kurve fährt, die Gangwechselsteuerung (7, 107, 207, 307) dazu konfiguriert ist, einen Bereich einer Änderung der Fahrlinie, wo eine Änderung der Gangstufen gesperrt ist, einen Bereich einer Änderung der Fahrlinie, wo eine Änderung der Antriebskraft durch Ändern der Gangstufen unterdrückt ist, und/oder einen Bereich einer Änderung der Fahrlinie, wo Ausziehen und Einziehen der vorderen Aufhängung (5) und/oder der hinteren Aufhängung (6) unterdrückt sind, gemäß einem Neigungswinkel des Neigungsfahrzeugs (1) zu ändern.

## Revendications

1. Véhicule à inclinaison (1) qui est configuré pour s'incliner vers la gauche lors d'un virage à gauche et pour s'incliner vers la droite lors d'un virage à droite, le véhicule à inclinaison (1) comprenant:
une carrosserie de véhicule (2);
une pluralité de roues (3, 4) comportant une roue avant (3) et une roue arrière (4);
une suspension avant (5) configurée pour supporter la roue avant (3) à la carrosserie de véhicule (2) de sorte que la roue avant (3) puisse être déplacée, la suspension avant (5) pouvant s'étendre et se rétracter;
une suspension arrière (6) configurée pour supporter la roue arrière (4) à la carrosserie de véhicule (2) de sorte que la roue arrière (4) puisse être déplacée, la suspension arrière (6) pouvant s'étendre et se rétracter;
une source d'entraînement (11) configurée pour alimenter une force d'entraînement vers au moins l'une parmi la roue avant (3) ou la roue arrière (4);
une transmission automatique à étages multiples de type engrenage (12, 312) comportant une pluralité d'étages de vitesse et un embrayage (40, 340, 360), et configurée pour modifier la force d'entraînement à transférer de la source d'entraînement (11) à l'au moins une parmi la roue avant (3) ou la roue arrière (4) en changeant automatiquement pas à pas les étages de vitesse; et
un moyen de commande de changement de vitesse (7, 107, 207, 307) configuré pour commander le changement des étages de vitesse dans la transmission automatique à étages multiples (12, 312),
**caractérisé par le fait que** sur base d'un état du véhicule dans lequel, tandis que le véhicule à inclinaison (1), qui tourne autour d'un axe de rotation s'étendant dans une direction gauche-droite en changeant les étages de vitesse dans la transmission automatique à étages multiples (12, 312), tourne dans un état d'inclinaison, est prédit un changement d'une ligne de déplacement du véhicule à inclinaison (1),
le moyen de commande de changement de vitesse (7, 107, 207, 307) est configuré pour effectuer au moins l'une parmi la suppression d'un changement de la force d'entraînement en changeant les étages de vitesse, ou la suppression de l'extension et de la rétraction de la suspension avant (5) et de la suspension arrière (6).

2. Véhicule à inclinaison (1) selon la revendication 1, dans lequel
le moyen de commande de changement de vitesse (7, 107, 207, 307) est configuré pour prédire un changement de la ligne de déplacement du véhicule à inclinaison (1) tandis que le véhicule à inclinaison (1), qui tourne autour de l'axe de rotation en changeant les étages de vitesse dans la transmission automatique à étages multiples (12, 312), tourne dans l'état d'inclinaison, sur base d'au moins l'une parmi une quantité d'extension/de rétraction d'au moins l'une parmi la suspension avant (5) ou la suspension arrière (6), d'un angle de rotation dans une direction vers l'avant ou vers l'arrière autour de l'axe de rotation du véhicule à inclinaison (1), ou de la force d'entraînement.

3. Véhicule à inclinaison (1) selon la revendication 2, dans lequel
le moyen de commande de changement de vitesse (7, 107, 207, 307) est configuré pour prédire que le véhicule à inclinaison (1) tourne autour de l'axe de rotation en changeant les étages de vitesse dans la transmission automatique à étages multiples (12, 312) et la ligne de déplacement du véhicule à inclinaison (1) change si est remplie au moins l'une parmi une condition que la quantité d'extension/de rétraction de la suspension avant (5) soit supérieure ou égale à un seuil de quantité d'extension/de rétraction avant, une condition que la quantité d'extension/de rétraction de la suspension arrière (6) soit supérieure ou égale à un seuil de quantité d'extension/de rétraction arrière, une condition que l'angle de rotation soit supérieur ou égal à un seuil d'angle de rotation, ou une condition que la force d'entraînement soit supérieure ou égale à un seuil de force d'entraînement.

4. Véhicule à inclinaison (1) selon l'une quelconque des revendications 1 à 3, dans lequel
la source d'entraînement (11) est configurée pour alimenter la force d'entraînement vers la roue arrière (4), et
sur base d'au moins une quantité d'extension de la suspension avant (5) ou une quantité de rétraction de la suspension arrière (6), le moyen de commande de changement de vitesse (7, 107, 207, 307) est configuré pour prédire un changement de la ligne de déplacement du véhicule à inclinaison (1) qui tourne autour de l'axe de rotation en changeant les étages de vitesse dans la transmission automatique à étages multiples (12, 312) tandis que le véhicule à inclinaison (1) tourne dans l'état d'inclinaison.

5. Véhicule à inclinaison (1) selon l'une quelconque des revendications 1 à 4, dans lequel
s'il est prédit un changement de la ligne de déplacement du véhicule à inclinaison (1) qui tourne autour de l'axe de rotation en changeant les étages de vitesse dans la transmission automatique à étages multiples (12, 312) tandis que le véhicule à inclinaison (1) tourne dans l'état d'inclinaison, le moyen de commande de changement de vitesse (7, 107, 207, 307) est configuré pour réduire une vitesse de dégagement de l'embrayage lors du changement des étages de vitesse dans la transmission automatique à étages multiples (12, 312) en comparaison avec une vitesse de dégagement de l'embrayage dans un cas où il n'est pas prédit de changement de la ligne de déplacement du véhicule à inclinaison (1).

6. Véhicule à inclinaison (1) selon l'une quelconque des revendications 1 à 4, dans lequel
s'il est prédit un changement de la ligne de déplacement du véhicule à inclinaison (1) qui tourne autour de l'axe de rotation en changeant les étages de vitesse dans la transmission automatique à étages multiples (12, 312) tandis que le véhicule à inclinaison (1) tourne dans l'état d'inclinaison, le moyen de commande de changement de vitesse (7, 107, 207, 307) est configuré pour réduire la force d'entraînement et pour dégager ensuite l'embrayage de la transmission automatique à étages multiples (12, 312) en changeant les étages de vitesse dans la transmission automatique à étages multiples (12, 312).

7. Véhicule à inclinaison (1) selon l'une quelconque des revendications 1 à 4, dans lequel
s'il est prédit un changement de la ligne de déplacement du véhicule à inclinaison (1) qui tourne autour de l'axe de rotation en changeant les étages de vitesse dans la transmission automatique à étages multiples (12, 312) tandis que le véhicule à inclinaison (1) tourne dans l'état d'inclinaison, le moyen de commande de changement de vitesse (7, 107, 207, 307) est configuré pour supprimer la quantité d'extension/de rétraction d'au moins l'une parmi la suspension avant (5) ou la suspension arrière (6) en comparaison avec un cas où il n'est pas prédit de changement de la ligne de déplacement du véhicule à inclinaison (1).

8. Véhicule à inclinaison (1) selon l'une quelconque des revendications 1 à 7, dans lequel
tandis que le véhicule à inclinaison (1) tourne dans l'état d'inclinaison, le moyen de commande de changement de vitesse (7, 107, 207, 307) est configuré pour changer au moins l'une parmi une plage d'un changement de la ligne de déplacement où le changement des étages de vitesse est inhibé, une plage d'un changement de la ligne de déplacement où un changement de la force d'entraînement en changeant les étages de vitesse est supprimé, ou une plage d'un changement de la ligne de déplacement où l'extension et la rétraction d'au moins l'une de la suspension avant (5) ou de la suspension arrière (6) sont supprimées, selon un angle d'inclinaison du véhicule à inclinaison (1).
